(19) Europäisches Patentamt
European Patent Office
Office européen des brevets

(11) EP 2 814 934 B1

(12) **EUROPEAN PATENT SPECIFICATION**

(45) Date of publication and mention of the grant of the patent:
**06.11.2024 Bulletin 2024/45**

(21) Application number: **12773163.6**

(22) Date of filing: **24.09.2012**

(51) International Patent Classification (IPC):
***C11D 3/40*** *(2006.01)* ***C09B 29/08*** *(2006.01)*

(52) Cooperative Patent Classification (CPC):
**C09B 29/0802; C09B 29/0059; C09B 69/00; C11D 3/40**

(86) International application number:
**PCT/US2012/056794**

(87) International publication number:
**WO 2013/006871 (10.01.2013 Gazette 2013/02)**

(54) **DYES FOR LAUNDRY CARE COMPOSITIONS**

FARBSTOFFE FÜR WÄSCHEPFLEGEZUSAMMENSETZUNGEN

COLORANTS POUR DES COMPOSITIONS D'ENTRETIEN DU LINGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.02.2012 US 201261597925 P**
**14.09.2012 US 201213615765**

(43) Date of publication of application:
**24.12.2014 Bulletin 2014/52**

(73) Proprietor: **Milliken & Company**
**Spartanburg, South Carolina 29303 (US)**

(72) Inventors:
- **TORRES, Eduardo**
**Boiling Springs, South Carolina 29316 (US)**
- **MIRACLE, Gregory S.**
**Liberty Township, Ohio 45044 (US)**
- **BRUHNKE, John D.**
**Spartanburg, South Carolina 29307 (US)**

(74) Representative: **Hoffmann Eitle**
**Patent- und Rechtsanwälte PartmbB**
**Arabellastraße 30**
**81925 München (DE)**

(56) References cited:
**EP-A1- 2 133 410**
**WO-A1-2008/087497**
**WO-A1-2008/091524**
**WO-A1-2012/166584**
**WO-A1-2012/166768**
**WO-A2-2011/011799**
**WO-A2-2011/017719**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 814 934 B1

## Description

FIELD OF INVENTION

This invention relates to fabric shading dyes for laundry care compositions comprising fabric shading dyes.

BACKGROUND OF THE INVENTION

As textile substrates age, their color tends to fade or yellow due to exposure to light, air, soil, and natural degradation of the fibers that comprise the substrates. To counteract this unwanted effect, laundry detergent manufacturers incorporate shading dyes into their products. The purpose of shading dyes is typically to counteract the fading and yellowing of the textile substrates by providing a blue-violet hue to the laundered fabrics, reducing the visual impact of the yellowing. There are many disclosures of shading dyes in detergents. Generally shading dyes are effective for shading a specific textile type, either cotton or synthetic fabrics, specifically polyester. Mixtures of dyes or dyes and pigments are generally needed to effect shading across a range of textiles, as is described in WO 2006/32327 and WO 2008/090091.

WO 2008/091524 discloses a whitening agent for cellulosic substrates comprising (a) at least one chromophore component comprising a thiophene colorant, and (b) at least one polymeric component; the whitening agent having the following structure wherein $R_1$ and $R_2$ are selected from specified polyalkylether moieties different from those of the dyes of the present invention:

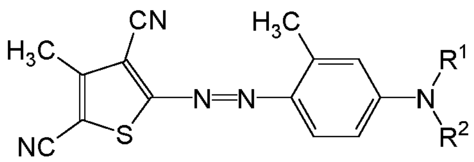

There is still a need to find dyes that will provide deposition across different types of fibres, such as cotton and synthetic fibres such as nylon and/or polyester and it is desirable to find dyes that deposit substantially evenly across different textile types and even mixed fibre types, such as polycotton. The present invention has been found to alleviate this problem. Furthermore the present invention provides compounds that are advantageous in providing a hueing effect, for example, a whitening effect to fabrics, while not building up over time and causing undesirable discoloration to the treated fabrics.

SUMMARY OF THE INVENTION

This invention relates to a compound which is a thiophene azo carboxylate dye of formula (I):

2

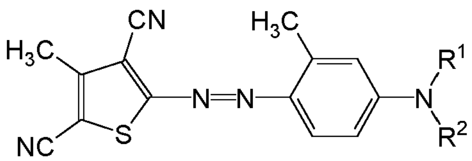

(I)

wherein

$R^1$, $R^2$ each independently are $[(CH_2CR'HO)_x(CH_2CR''HO)_yQ]$;
R' is H, $C_{1-4}$-alkyl, $CH_2O(CH_2CH_2O)_zQ$, phenyl or $CH_2OR^5$;
R" is H, $C_{1-4}$-alkyl, $CH_2O(CH_2CH_2O)_zQ$, phenyl or $CH_2OR^5$;
($x$+$y$) is in the range of 1-50;
y is ≥ 1;
z is in the range of 0-20;
$R^5$ each is linear or branched $C_1$-$_{16}$-alkyl, $C_6$-$_{14}$-aryl or $C_7$-$_{16}$-arylalkyl;
Q is H or Y; wherein Y is a group of formula (II)

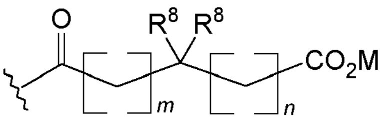

(II)

wherein independently for each group Y, M is H or a charge balancing cation; *m* is 0-5; *n* is 0-5; and (*m*+*n*) is 1-10; and $R^8$ each independently is H or $C_{3-18}$-alkenyl, and at least one $R^8$ is not H;

with the provisos that

(i) the dye comprises at least one group Q that is Y, and
(ii) the compound of the following formula is excluded:

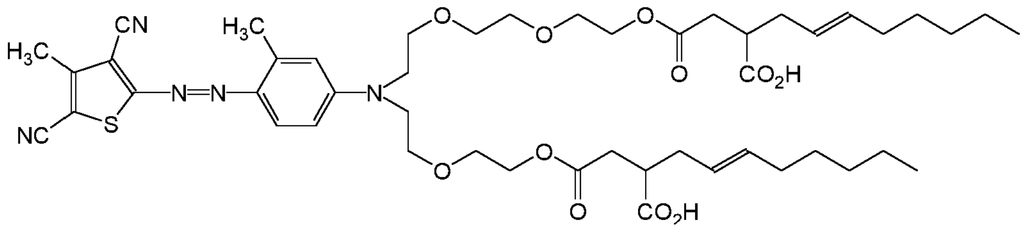

Preferred embodiment of the present invention are as defined in the appended dependent claims and/or in the following detailed description.

A method of treating a polyester and/or nylon-comprising textile comprises the steps of (i) treating the textile with an aqueous solution comprising a laundry care adjunct and 1ppb to 500ppm of the present thiophene azo carboxylate dye of formula (I); and (ii) rinsing and drying the textile. In a preferred method the textile comprises in addition to the polyester and/or nylon, cellulosic textile.

A laundry care composition comprising a laundry care adjunct, and 0.00001-0.5 wt% of the present thiophene azo carboxylate dye of Formula (I) can suitably be used for treating a polyester and/or nylon-comprising textile, preferably additionally comprising cellulosic textile. The laundry care adjunct comprises first wash lipase and/or a dye transfer inhibitor selected from polyvinylpyrrolidone polymers, polyamine N-oxide polymers, copolymers of N-vinylpyrrolidone and N-vinylimidazole, polyvinyloxazolidones, polyvinylimidazoles and mixtures thereof and/or a soil suspension polymer selected from (a) amphiphilic alkoxylated polyamines, amphiphilic graft co-polymers, zwitterionic soil suspension polymer and mixtures thereof.

The composition is in the form of a single or multi-compartment unit dose laundry care composition.

DETAILED DESCRIPTION OF THE INVENTION

Definitions

The following definitions will be used herein.

The term "alkoxy" includes Ci-s-alkoxy and alkoxy derivatives of polyols having repeating units such as butylene oxide, glycidol oxide, ethylene oxide or propylene oxide.

Unless otherwise specified, the terms "alkyl" and "alkyl capped" include $C_1$-$_{18}$-alkyl, and preferably $C_1$-$_6$-alkyl groups.

Unless otherwise specified, the term "aryl" includes $C_3$-$_{12}$-aryl.

Unless otherwise specified, the term "arylalkyl" includes $C_1$-$_{18}$-alkyl, and preferably $C_1$-$_6$-alkyl.

The terms "ethylene oxide," "propylene oxide" and "butylene oxide" may be shown herein by their typical designation of "EO," "PO" and "BO," respectively.

The term "laundry care composition" includes, unless otherwise indicated, granular, powder, liquid, gel, paste, unit dose, bar form and/or flake type washing agents and/or fabric treatment compositions, including but not limited to products for laundering fabrics, fabric softening compositions, fabric enhancing compositions, fabric freshening compositions, and other products for the care and maintenance of fabrics, and combinations thereof. Such compositions may be pre-treatment compositions for use prior to a washing step or may be rinse added compositions, as well as cleaning auxiliaries, such as bleach additives and/or "stain-stick" or pre-treat compositions or substrate-laden products such as dryer added sheets.

The term "detergent composition" is a sub-set of laundry care composition and includes cleaning compositions including but not limited to products for laundering fabrics. Such compositions may be pre-treatment composition for use prior to a washing step or may be rinse added compositions, as well as cleaning auxiliaries, such as bleach additives and "stain-stick" or pre-treat types.

"Cellulosic substrates" include any substrate which comprises at least a majority by weight of cellulose. Cellulose may be found in wood, cotton, linen, jute, and hemp. Cellulosic substrates may be in the form of powders, fibers, pulp and articles formed from powders, fibers and pulp. Cellulosic fibers, include, without limitation, cotton, rayon (regenerated cellulose), acetate (cellulose acetate), triacetate (cellulose triacetate), and mixtures thereof. Articles formed from cellulosic fibers include textile articles such as fabrics. Articles formed from pulp include paper.

The term "maximum extinction coefficient" describes the molar extinction coefficient at the wavelength of maximum absorption (also referred to herein as the maximum wavelength), in the range of 400-750 nm.

"Average molecular weight" of the thiophene azo carboxylate dyes is reported as an average molecular weight, as determined by its molecular weight distribution: as a consequence of their manufacturing process, the thiophene azo carboxylate dyes disclosed herein may contain a distribution of repeating units in their polymeric moiety.

The test methods disclosed in the Test Methods Section of the present application should be used to determine the respective values of the parameters of Applicants' inventions.

Articles such as "a" and "an" when used in a claim, are understood to mean one or more of what is claimed or described.

The terms "include/s"and "including" are meant to be non-limiting.

The term "solid" includes granular, powder, bar and tablet product forms.

The term "fluid" includes liquid, gel, paste and gas product forms.

Unless otherwise noted, all component or composition levels are in reference to the active portion of that component or composition, and are exclusive of impurities, for example, residual solvents or by-products, which may be present in commercially available sources of such components or compositions.

All percentages and ratios are calculated by weight unless otherwise indicated. All percentages and ratios are calculated based on the total composition unless otherwise indicated.

<u>Dye</u>

The compound of the present invention is a dye selected from thiophene azo carboxylate dyes of Formula (I):

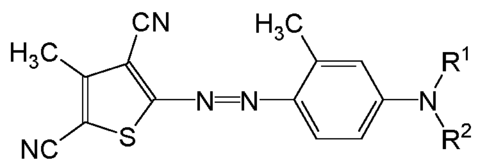

(I)

wherein

$R^1$, $R^2$ each independently are $[(CH_2CR'HO)_x(CH_2CR''HO)_yQ]$;
R' is H, $C_{1-4}$-alkyl, $CH_2O(CH_2CH_2O)_zQ$, phenyl or $CH_2OR^5$;
R" is H, $C_{1-4}$-alkyl, $CH_2O(CH_2CH_2O)_zQ$, phenyl or $CH_2OR^5$;
($x$+$y$) is in the range of 1-50;
$y$ is ≥ 1;
$z$ is in the range of 0-20;
$R^5$ each is linear or branched $C_{1-16}$-alkyl, $C_{6-14}$-aryl or $C_{7-16}$-arylalkyl;
Q is H or Y; wherein Y is a group of formula (II)

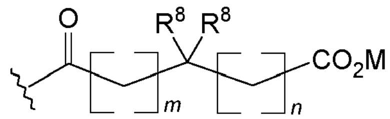

(II)

wherein independently for each group Y, M is H or a charge balancing cation; $m$ is 0-5; $n$ is 0-5; and ($m$+$n$) is 1-10; and $R^8$ each independently is H or $C_{3-18}$-alkenyl, and at least one $R^8$ is not H;

with the provisos that

(i) the dye comprises at least one group Q that is Y, and
(ii) the compound of the following formula is excluded:

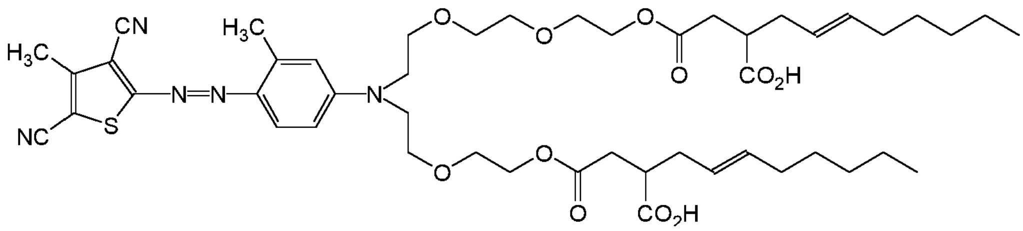

In formula (I), (x+y) is preferably 2-50, more preferably ≤ 25, and more preferably ≤ 10. Also, z is preferably 1-20, and more preferably 0-10 or even 0-5.

$R^5$ in formula (I) is preferably each independently methyl, ethyl, propyl, isopropyl, butyl, sec-butyl, isobutyl, t-butyl, hexyl, 2-ethylhexyl, octyl, decyl, dodecyl, tetradecyl, hexadecyl, phenyl, benzyl, 2-phenylethyl or naphthyl.

In formula (II) m and n each independently are preferably 0, 1, 2 or 3, and (m+n) is preferably 1, 2 or 3. Also, in formula (II) $R^8$ each preferably be selected from $C_4$-$_{18}$-alkenyl, or even $C_{4-7}$ and/or $C_{9-18}$-alkenyl.

In particular the dye may be selected from dyes of Formula (I) wherein:

(a) $R^1$ and $R^2$ are independently $[(CH_2CR'HO)_x(CH_2CR''HO)_yQ]$ and wherein R' is H, $CH_3$ or $CH_2O(CH_2CH_2O)_zQ$; R'' is H or $CH_2O(CH_2CH_2O)_zQ$; (x+y) ≤ 5; y ≥ 1; z = 0-5; and Q is H or Y wherein Y is as defined below; with the proviso that at least one Q group on either of $R^1$ or $R^2$, preferably one Q group on each of $R^1$ and $R^2$, is Y; or
(b) $R^1$ and $R^2$ are independently selected from formula III:

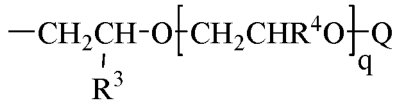

(III)

wherein $R^3$ is phenyl or $-CH_2OR^5$; $R^4$ each independently is H or $C_{1-4}$-alkyl, preferably H or methyl, even more preferably H; and q is an integer of 0-50, preferably 1-25, even more preferably 1-10; and wherein Q is H or Y wherein Y is as defined below; with the proviso that there is at least one Q on $R^1$ or $R^2$, preferably one Q on each of $R^1$ and $R^2$, and at least one Q is Y; $R^5$ is linear or branched $C_1$-$_{16}$-alkyl, $C_6$-$_{14}$-aryl or $C_7$-$_{16}$-arylalkyl; and preferably is methyl, ethyl, propyl, isopropyl, butyl, sec-butyl, isobutyl, t-butyl, hexyl, 2-ethylhexyl, octyl, decyl, dodecyl, tetradecyl, hexadecyl, phenyl, benzyl, 2-phenylethyl or naphthyl;

and Y is an organic radical of Formula (II) as defined above, in general as well as with respect to preferred embodiments thereof.

A preferred class of dyes of the present invention has formula (IV):

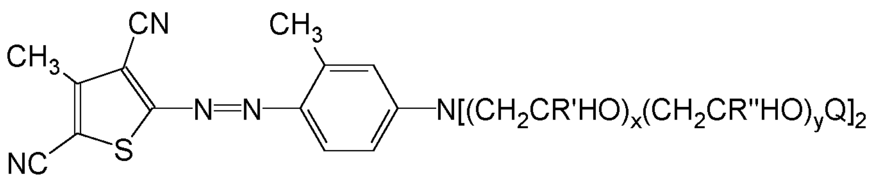

(IV)

wherein R' and R'' each independently are H or $CH_3$, $CH_2O(CH_2CH_2O)_zQ$; and (x+y) ≤ 5 and y ≥ 1; z = 0-5 and at least one group Q is Y.

In one embodiment, $R^1$ and $R^2$ are preferably formed by the amino addition reaction of styrene oxide, glycidyl methyl ether, isobutyl glycidyl ether, isopropylglycidyl ether, t-butyl glycidyl ether, 2-ethylhexylgycidyl ether, and glycidylhexadecyl ether, followed by the addition of 1-10 alkylene oxide units wherein at least one of said alkylene oxide units is terminated with Y via reaction with an anhydride.

Particularly preferred anhydrides suitable for use in creating the Y moiety in the instant invention include, but

are not limited to, the following: 3-(2-buten-1-yl)dihydro-2,5-furandione; 3-(2-hexen-1-yl)dihydro-2,5-furandione; dihydro-3-(2-octen-1-yl)-2,5-furandione; dihydro-3-(2,7-octadien-1-yl)-2,5-furandione; dihydro-3-(2-nonen-1-yl)-2,5-furandione; 3-(2-decen-1-yl)dihydro-2,5-furandione; 3-(2E)-2-dodecen-1-yldihydro-2,5-furandione; dihydro-3-(2-tetradecen-1-yl)-2,5-furandione; 3-(2-hexadecen-1-yl)dihydro-2,5-furandione; and dihydro-3-(2-octadecen-1-yl)-2,5-furandione.

Such suitable anhydrides may be obtained from one or more of the following: Sigma-Aldrich, St. Louis, MO 63178; City Chemical LLC, West Haven, CT 06516; Ryan Scientific, Inc., Mt. Pleasant, SC 29465; TCI America, Portland, OR 97203; Aurora Fine Chemicals LLC, San Diego, CA 92126; Accel Pharmtech, LLC, East Brunswick, NJ 08816; ABI Chem, Munich, Germany; BOC Sciences, Shirley, NY 11967; ChemSampCo, Inc., Dallas, TX 75220; and Reagent World, Inc., Ontario, CA 91761

Typically the dye will be incorporated into the composition in the form of a mixture of reaction products formed by the organic synthesis route used: such a reaction mixture will typically comprise a mixture of the dyes of formula (I) and often, in addition, reaction products of side reactions and/or minor amounts of unreacted starting materials. Although it may be preferred to remove impurities other than the dyes as defined in formula (I), it may not be necessary, so the mixture of reaction products may be used directly in a composition according to the invention. In particular when the dye is formed via the reaction with an anhydride, the regioselectivity of the anhydride ring opening may not be high. Without wishing to be bound by theory, although the most abundant dye present in the mixture may be that produced where the alcohol attacks at the least hindered carbonyl group, the reaction product formed by the attack at the more hindered carbonyl group would likely also be present.

Typically the dye or mixture of dyes of formula (I) will be present in the composition in an amount of 0.00001-5 wt% of the composition, more usually 0.0001-1 wt% or 0.0001-0.5 wt% of the composition.

Where the dye is first formed into a pre-mix, for example a particle or concentrated liquid for incorporation into the composition, the dye may be present at a level of ≥ 0.001 or even ≥ 0.01, up to an amount of 2 wt%, or 10 wt% based on the weight of the pre-mix.

Examples of suitable dyes are shown in Table 1.

Table 1: Thiophene Azo Carboxylate Dyes

| No. | Formula |
|---|---|
| Example 1 | 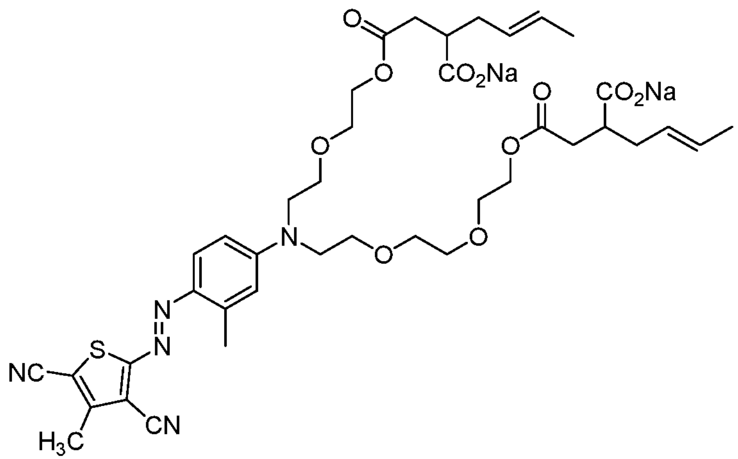 |
| Example 2 | 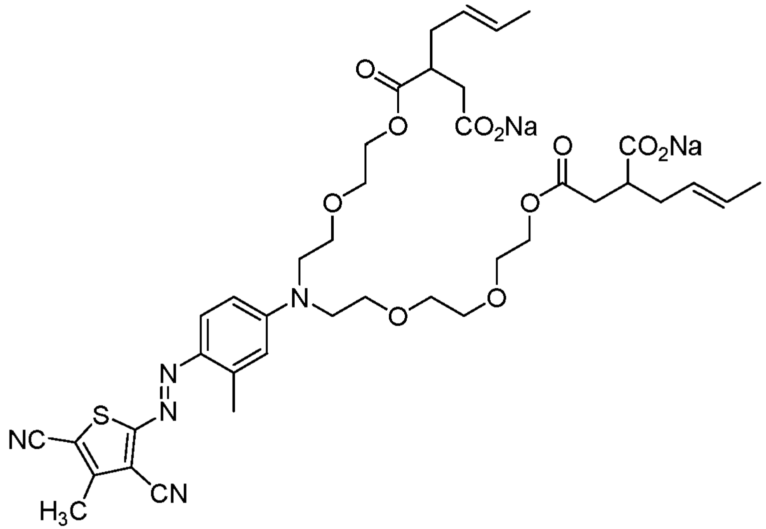 |

(continued)

| No. | Formula |
|---|---|
| Example 3 | 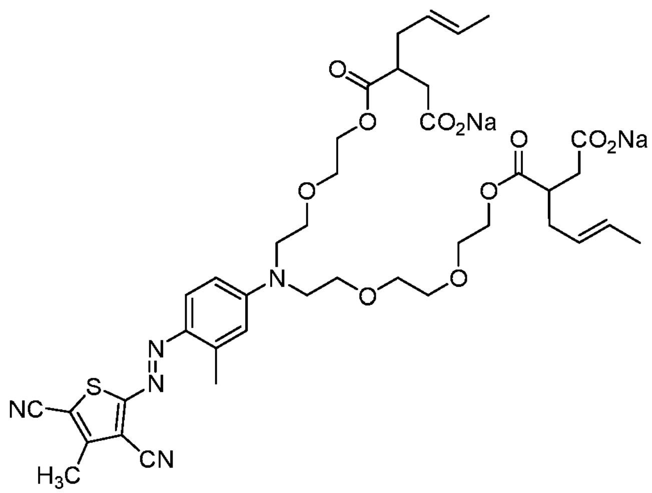 |
| Example 4 | 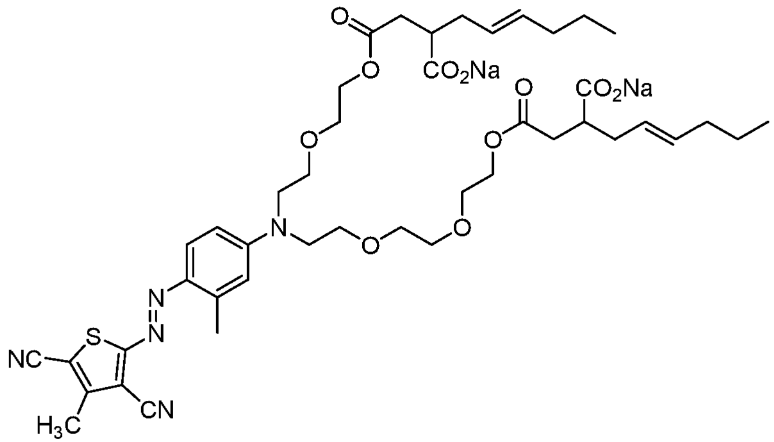 |

(continued)

| No. | Formula |
| --- | --- |
| Example 5 | 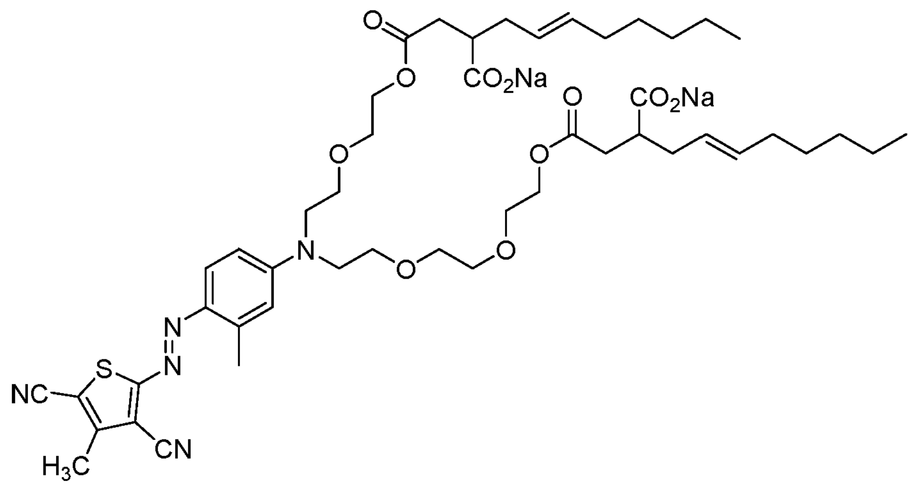 |
| Example 6 | 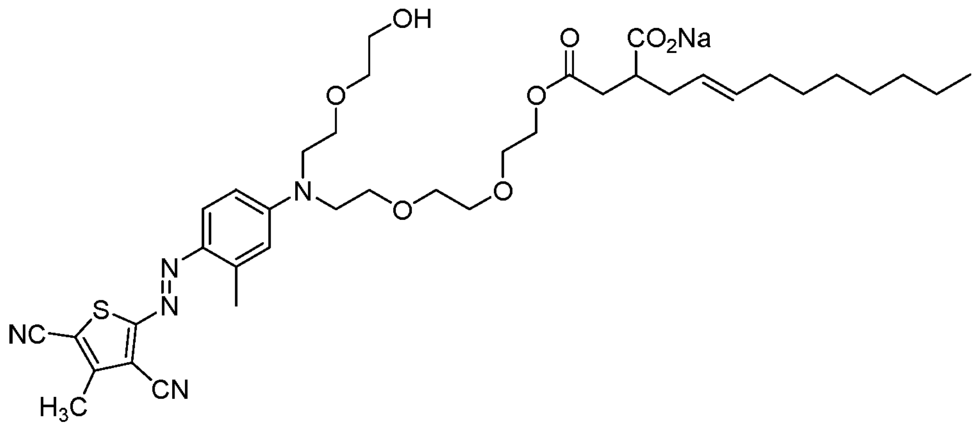 |

(continued)

| No. | Formula |
|---|---|
| Example 7 | 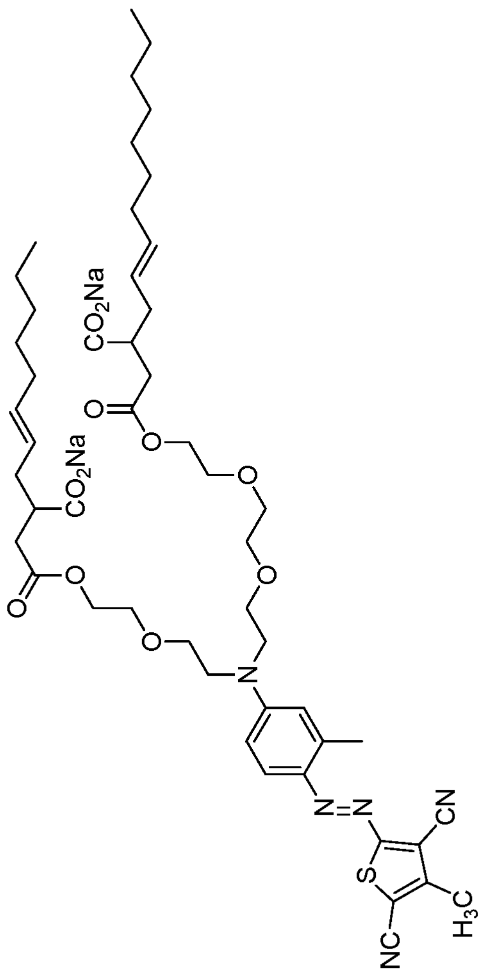 |
| Example 8 | 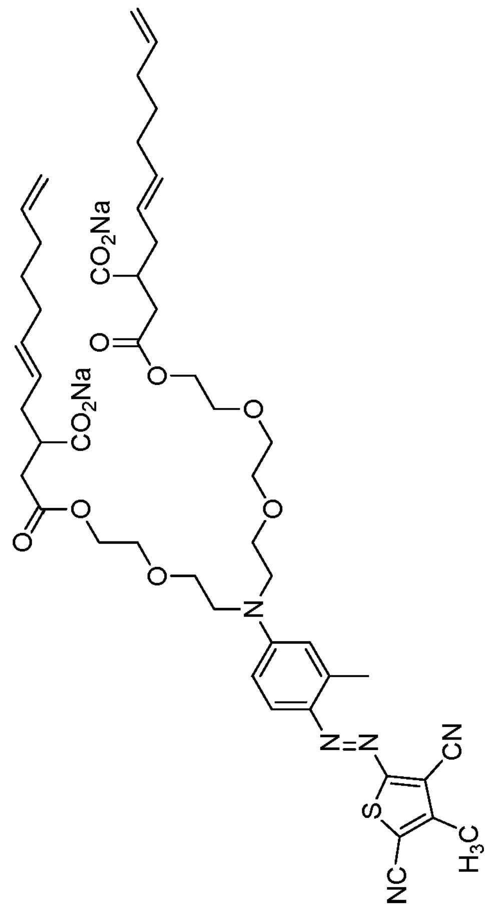 |

(continued)

| No. | Formula |
|---|---|
| Example 9 | 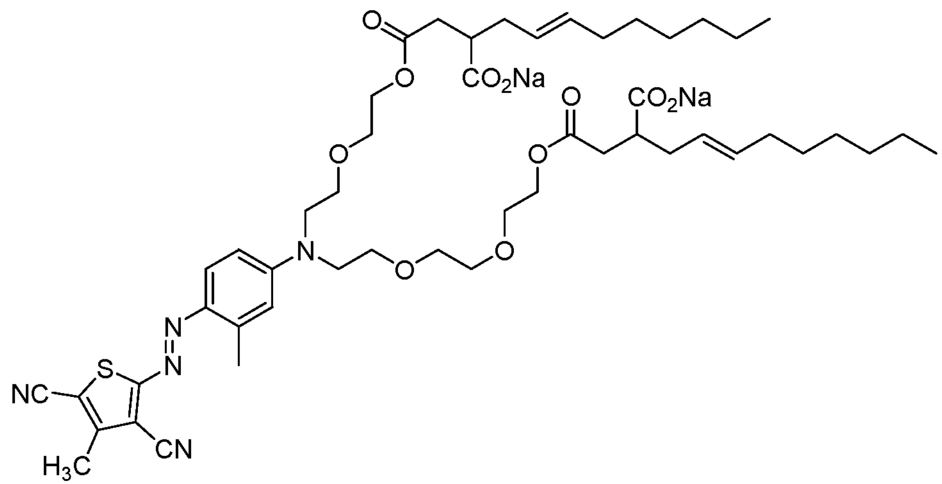 |
| Example 10 | 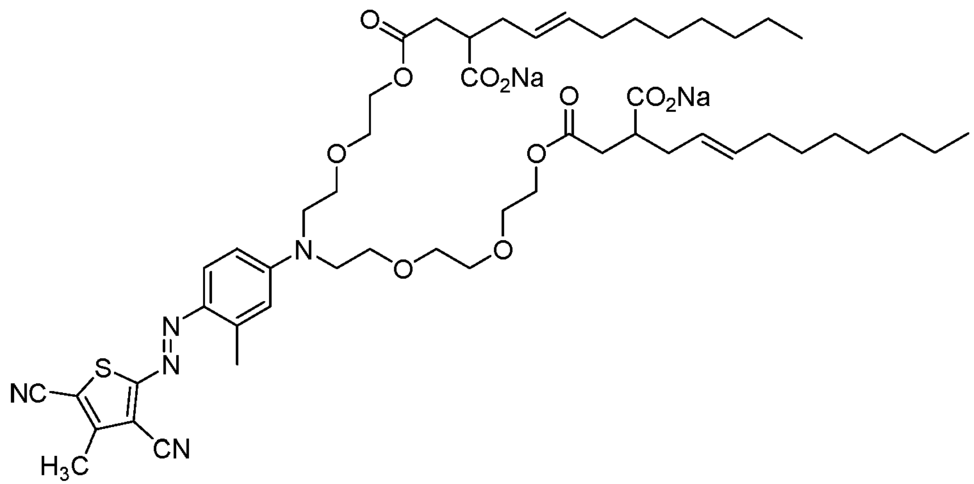 |

(continued)

| No. | Formula |
|---|---|
| Example 11 | 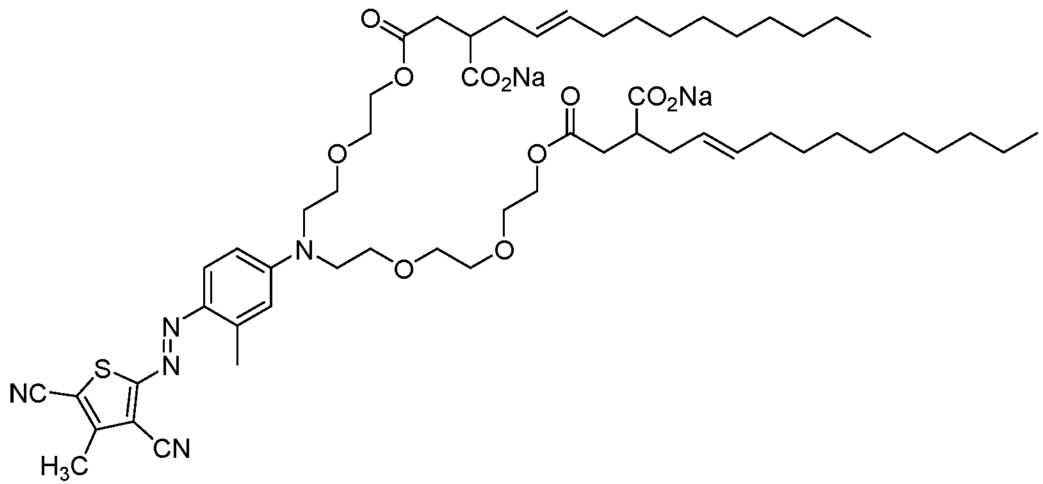 |
| Example 12 | 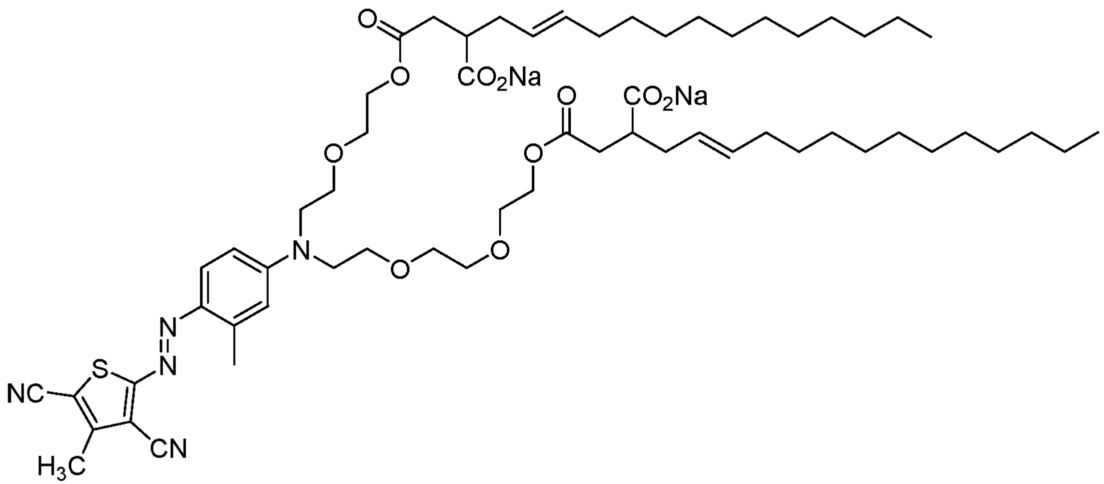 |

(continued)

| No. | Formula |
| --- | --- |
| Example 13 | 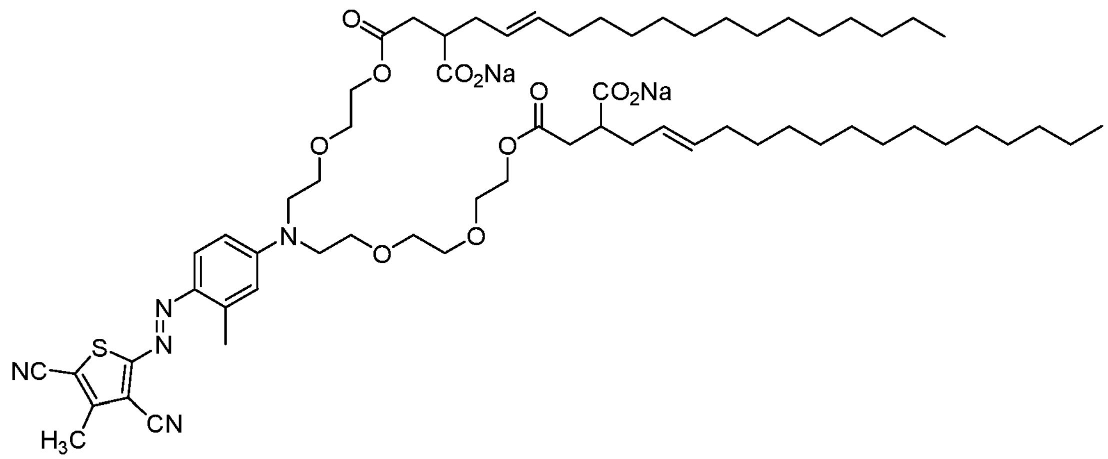 |
| Example 14 | 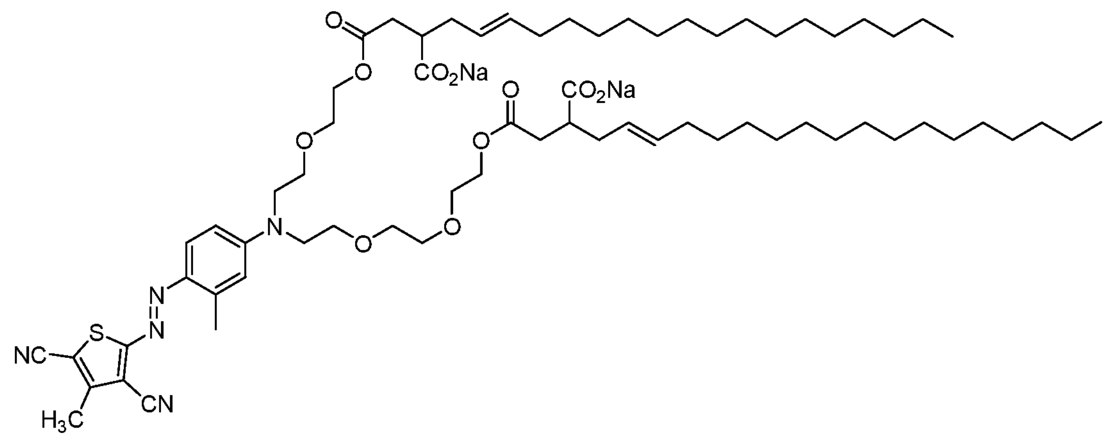 |

(continued)

| No. | Formula |
|---|---|
| Example 15 | 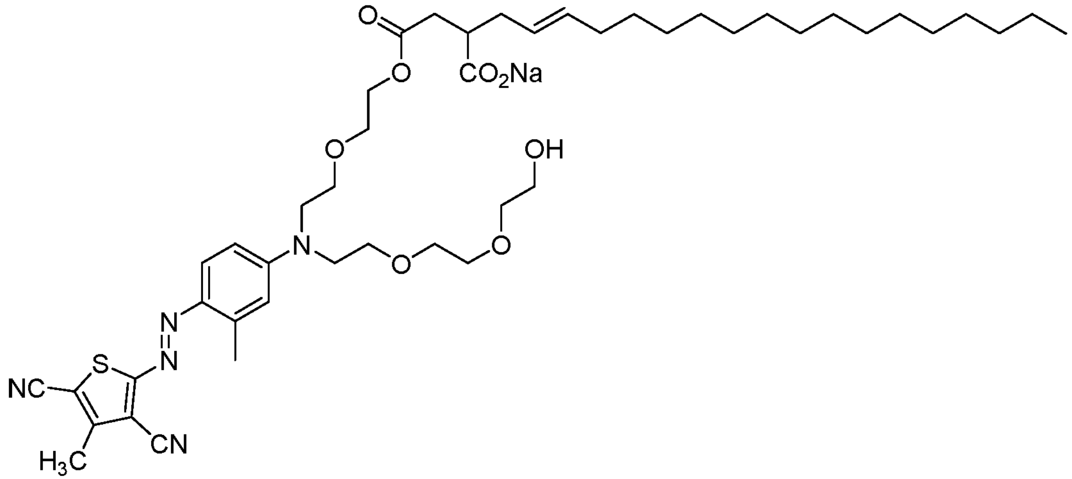 |
| Example 27 | 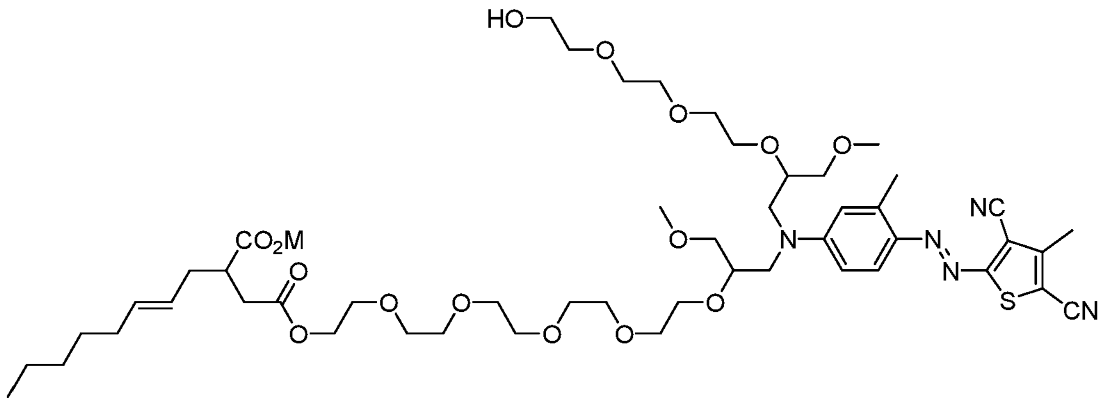 |

(continued)

| No. | Formula |
| --- | --- |
| Example 28 | 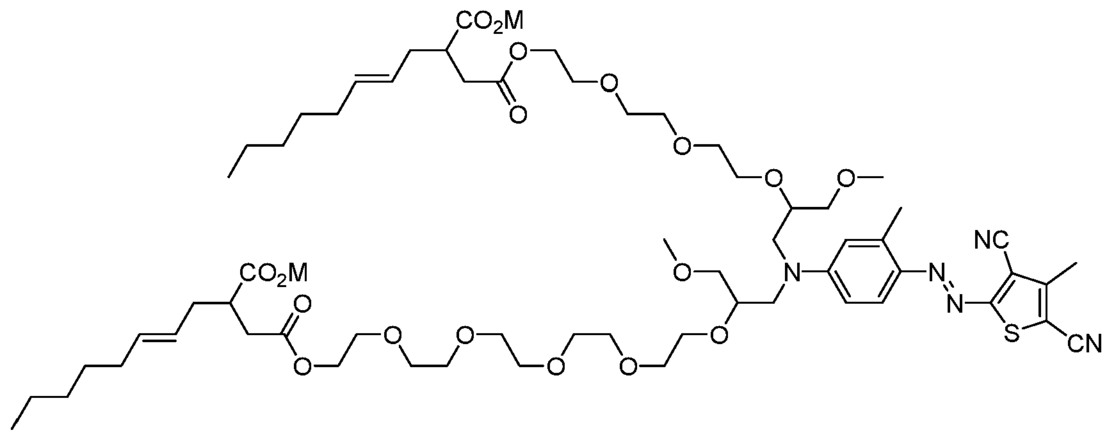 |

Dye Synthesis

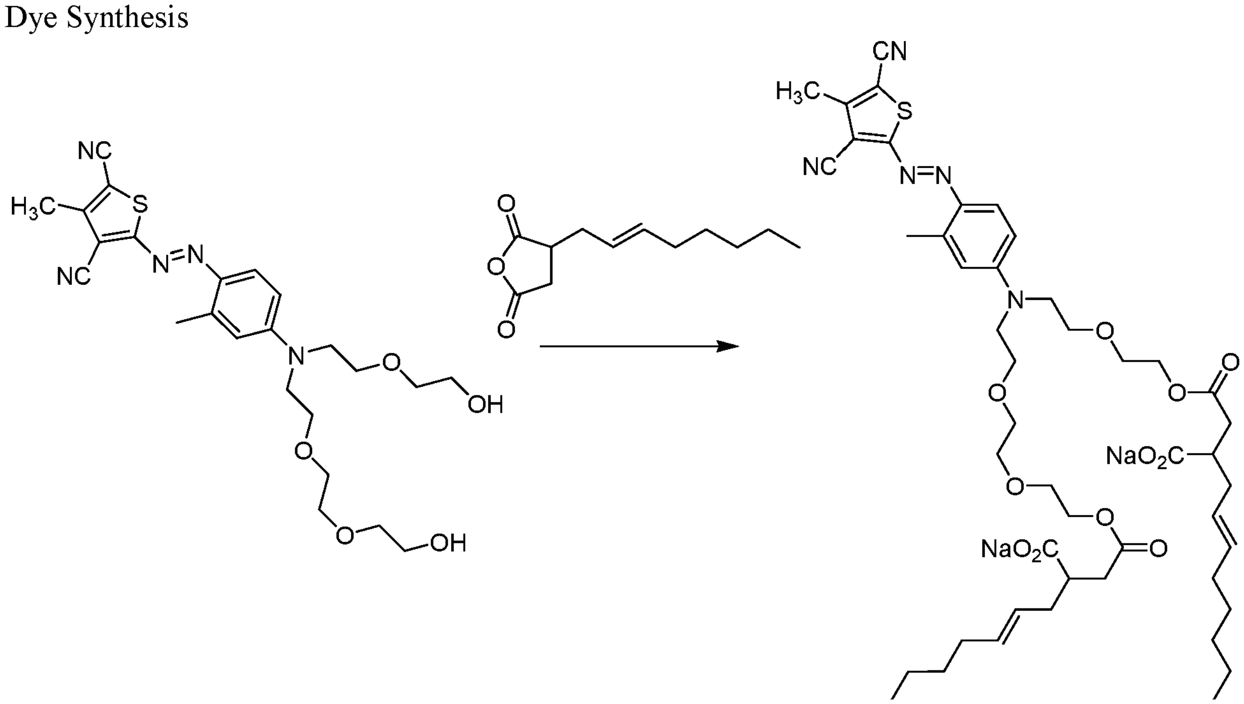

Dye A Dye B

To 25 parts of the thiophene azo polymeric colorant (synthesized according to the procedure disclosed in US 4,912,203 to Kluger et al.) is added 22 parts of dihydro-3-(2-octen-1-yl)-2,5-furandione (prepared as described in Example 1 of US 5,512,685 to Jarvinen et al.). The reaction, comprising a molar ratio of anhydride to polymeric colorant of 2.1:1.0, is heated to 85°C for 12 hours and then cooled down to room temperature. The pH of the mixture is adjusted to 7 using sodium hydroxide, and the water is removed from the mixture via rotary evaporation. The resulting reaction mixture comprises a mixture of regio-isomers including that shown above and is obtained in substantially quantitative conversion as assessed by HPLC. The reaction can also be carried out with alternative anhydrides or alternative thiophene azo polymeric colorants such as those described in WO 2008/087497, and may be conducted using mole ratios of anhydride to colorant that ensure the highest levels of the desired product in the reaction mixture. Such ratios will of course vary depending on the number of primary and/or secondary alcohol groups available for reaction with anhydrides in the polymeric colorant employed. In some cases it may be preferred to use 1.0-5.0, or even to 10.0 equivalents of anhydride for each equivalent of primary and/or secondary alcohol groups available for reaction with anhydrides in the polymeric colorant employed. If the reaction is run in the presence of materials that also contain reactive alcohol groups, such as solvent or excess starting material carried over from the synthesis of the dye, the amount of anhydride used may be adjusted to ensure that the excess of anhydride remaining after reaction with said non-dye materials is sufficient to provide 1.0-5.0, or even to 10.0 equivalents of anhydride for each equivalent of primary and/or secondary alcohol groups available for reaction with anhydrides in the polymeric colorant employed.

For example, the synthesis of Dye A above can be accomplished via coupling of the appropriate diazotized thiophene amine with the corresponding bis-ethoxylated amino toluene non-dye material. In order to ensure that no diazotized amine remains, an excess of the bis-ethoxylated amino toluene may be employed. In such an instance, Dye A is formed in the presence of excess bis-ethoxylated amino toluene non-dye material. This mixture may be purified, or it may be used without further purification in the formation of the colorants described herein.

Especially preferred examples of alternative anhydrides suitable for use in creating the Y moiety in the instant invention include3-(2-buten-1-yl)dihydro-2,5-furandione; 3-(2-hexen-1-yl)dihydro-2,5-furandione; dihydro-3-(2-octen-1-yl)-2,5-furandione; dihydro-3 -(2,7-octadien-1-yl)-2,5-furandione; dihydro-3-(2-nonen-1-yl)-2,5-furandione; 3-(2-decen-1-yl)dihydro-2,5-furandione; 3-(2E)-2-dodecen-1-yldihydro-2,5-furandione; dihydro-3-(2-tetradecen-1-yl)-2,5-furandione; 3-(2-hexadecen-1-yl)dihydro-2,5-furandione; and dihydro-3-(2-octadecen-1-yl)-2,5-furandione.

Such suitable anhydrides may be obtained from one or more of the following: Sigma-Aldrich, St. Louis, MO 63178; City Chemical LLC, West Haven, CT 06516; Ryan Scientific, Inc., Mt. Pleasant, SC 29465; TCI America, Portland, OR 97203; Aurora Fine Chemicals LLC, San Diego, CA 92126; Accel Pharmtech, LLC, East Brunswick, NJ 08816; ABI Chem, Munich, Germany; BOC Sciences, Shirley, NY 11967; ChemSampCo, Inc., Dallas, TX 75220; and Reagent World, Inc., Ontario, CA 91761

Examples of suitable glycidyl ethers for use in the present invention include 2-(methoxymethyl)-oxirane;

2-(ethoxymethyl)-oxirane; 2-(propoxymethyl)-oxirane; 2-[(1-methylethoxy)methyl] -oxirane; 2-(butoxymethyl)-oxirane; 2-[(1 -methylpropoxy)methyl] - oxirane; 2-[(2-methylpropoxy)methyl]-oxirane; 2-[(1,1-dimethylethoxy)methyl]-oxirane; 2-(hexyloxymethyl)-oxirane; 2-(octyloxymethyl)-oxirane; 2-(decyloxymethyl)-oxirane; 2-(dodecyloxymethyl)-oxirane; 2-(tetradecyloxymethyl)-oxirane; 2-(hexadecyloxymethyl)-oxirane; 2-(phenoxymethyl)-oxirane; 2-[(phenylmethoxy)methyl]-oxirane; 2-[(phenylethoxy)methyl]-oxirane; 2-[(1-naphthalenyloxy)methyl]-oxirane; and 2-[(2-naphthalenyloxy)methyl]-oxirane.

Such suitable glycidyl ethers may be obtained from one of the following suppliers: VWR International, LLC, Radnor, PA, 19087; TCI America, Portland, OR, 97203; 3B Scientific Corporation, Libertyville, IL, 60048; City Chemical LLC, West Haven, CT, 06516; Sigma-Aldrich, St. Louis, MO, 63178; Ryan Scientific, Inc., Mt. Pleasant, SC, 29465; ABI Chem, Munich, 58356, Germany; BOC Sciences, Shirley, NY, 11967; and Toronto Research Chemicals Inc., North York, ON, M3J 2J8, Canada.

Laundry Care Adjunct Materials

Suitable adjuncts may be, for example to assist or enhance cleaning performance, for treatment of the substrate to be cleaned, for example by softening or freshening, or to modify the aesthetics of the composition as is the case with e.g. perfumes, colorants or non-fabric-shading dyes. Suitable adjunct materials include, but are not limited to, surfactants, builders, chelating agents, dye transfer inhibiting agents, dispersants, enzymes, and enzyme stabilizers, catalytic materials, bleach activators, hydrogen peroxide, sources of hydrogen peroxide, preformed peracids, polymeric dispersing agents, clay soil removal/anti-redeposition agents, brighteners, suds suppressors, dyes, hueing dyes, perfumes, perfume delivery systems, structure elasticizing agents, fabric softeners, carriers, hydrotropes, processing aids, solvents, additional dyes and/or pigments, some of which are discussed in more detail below. In addition to the disclosure below, suitable examples of such other adjuncts and levels of use are found in US 5,576,282, US 6,306,812 and US 6,326,348.

**Additional Fabric Hueing Agents.** Although it is not preferred to incorporate additional fabric shading dyes, in addition to the thiophene azo dye, the composition may comprise one or more additional fabric hueing agents._Suitable fabric hueing agents include dyes, dye-clay conjugates, and pigments. Suitable dyes include those that deposit more onto cotton textiles compared to deposition onto synthetic textiles such as polyester and/or nylon. Further suitable dyes include those that deposit more onto synthetic fibres such as polyester and/or nylon compared to cotton. Suitable dyes include small molecule dyes and polymeric dyes. Suitable small molecule dyes include small molecule dyes selected from dyes falling into the Colour Index (C.I.) classifications of Direct Blue, Direct Red, Direct Violet, Acid Blue, Acid Red, Acid Violet, Basic Blue, Basic Violet and Basic Red, or mixtures thereof. Examples of small molecule dyes include those selected from Colour Index (Society of Dyers and Colourists, Bradford, UK) numbers Direct Violet 9, Direct Violet 35, Direct Violet 48, Direct Violet 51, Direct Violet 66, Direct Violet 99, Direct Blue 1, Direct Blue 71, Direct Blue 80, Direct Blue 279, Acid Red 17, Acid Red 73, Acid Red 88, Acid Red 150, Acid Violet 15, Acid Violet 17, Acid Violet 24, Acid Violet 43, Acid Red 52, Acid Violet 49, Acid Violet 50, Acid Blue 15, Acid Blue 17, Acid Blue 25, Acid Blue 29, Acid Blue 40, Acid Blue 45, Acid Blue 75, Acid Blue 80, Acid Blue 83, Acid Blue 90 and Acid Blue 113, Acid Black 1, Basic Violet 1, Basic Violet 3, Basic Violet 4, Basic Violet 10, Basic Violet 35, Basic Blue 3, Basic Blue 16, Basic Blue 22, Basic Blue 47, Basic Blue 66, Basic Blue 75, Basic Blue 159, small molecule dyes selected from the group consisting of Colour Index (Society of Dyers and Colourists, Bradford, UK) numbers Acid Violet 17, Acid Violet 43, Acid Red 52, Acid Red 73, Acid Red 88, Acid Red 150, Acid Blue 25, Acid Blue 29, Acid Blue 45, Acid Blue 113, Acid Black 1, Direct Blue 1, Direct Blue 71. Direct Violet small molecule dyes may be preferred. Dyes selected from the group consisting Acid Violet 17, Direct Blue 71, Direct Violet 51, Direct Blue 1, Acid Red 88, Acid Red 150, Acid Blue 29, Acid Blue 113 and mixtures thereof may be preferred.

Suitable polymeric dyes include polymeric dyes selected from polymers containing covalently bound chromogens (dye-polymer conjugates) and polymers with chromogens copolymerized into the backbone of the polymer and mixtures thereof, and polymeric dyes selected from fabric-substantive colorants sold under the name of Liquitint® (Milliken, Spartanburg, South Carolina, USA), dye-polymer conjugates formed from at least one reactive dye and a polymer selected from polymers comprising a moiety selected from a hydroxyl moiety, a primary amine moiety, a secondary amine moiety, a thiol moiety and mixtures thereof. In still another aspect, suitable polymeric dyes include polymeric dyes selected from Liquitint® (Milliken, Spartanburg, South Carolina, USA) Violet CT, carboxymethyl cellulose (CMC) conjugated with a reactive blue, reactive violet or reactive red dye such as CMC conjugated with C.I. Reactive Blue 19, sold by Megazyme, Wicklow, Ireland under the product name AZO-CM-CELLULOSE, product code S-ACMC, alkoxylated triphenyl-methane polymeric colourants, alkoxylated thiophene polymeric colourants, and mixtures thereof. Preferred additional hueing dyes include the whitening agents found in WO 08/87497. These whitening agents may be characterized by the following structure (IV):

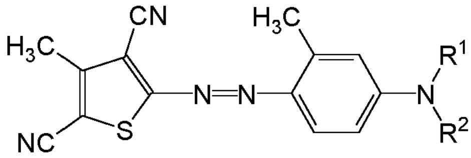

(IV)

wherein $R_1$ and $R_2$ can independently be selected from:

a) $[(CH_2CR'HO)_x(CH_2CR''HO)_yH]$, wherein R' is H, $CH_3$ or $CH_2O(CH_2CH_2O)_zH$; R" is H or $CH_2O(CH_2CH_2O)_zH$; $(x+y) \leq 5$; $y \geq 1$; and z = 0-5;
b) $R_1$ = alkyl, aryl or aryl alkyl and $R_2 = [(CH_2CR'HO)_x(CH_2CR''HO)_yH]$
wherein R', and R", y and z are as defined above, and $(x+y) \leq 10$;
c) $R_1 = [CH_2CH\ (OR_3)CH_2OR_4]$ and $R_2 = [CH_2CH\ (O\ R_3)CH_2O\ R_4]$
wherein $R_3$ is H or $(CH_2CH_2O)_zH$ and z = 0-10; and $R_4$ is $C_{1-16}$-alkyl or aryl; and
d) $R_1$ and $R_2$ can independently be selected from the amino addition product of styrene oxide, glycidyl methyl ether, isobutyl glycidyl ether, isopropylglycidyl ether, t-butyl glycidyl ether, 2-ethylhexylgycidyl ether, and glycidylhexadecyl ether, followed by the addition of 1-10 alkylene oxide units.

A preferred additional fabric hueing agent may be characterized by the structure (IV):

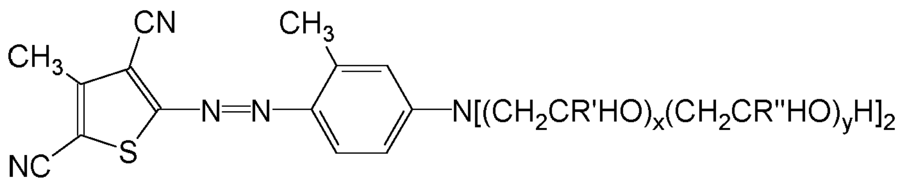

(IV)

wherein R' is H, $CH_3$ or $CH_2O(CH_2CH_2O)_zH$; R" is H or $CH_2O(CH_2CH_2O)_zH$; $(x+y) \leq 5$; $y \geq 1$; and z = 0-5.

A further preferred additional hueing dye may be characterized by the structure (V):

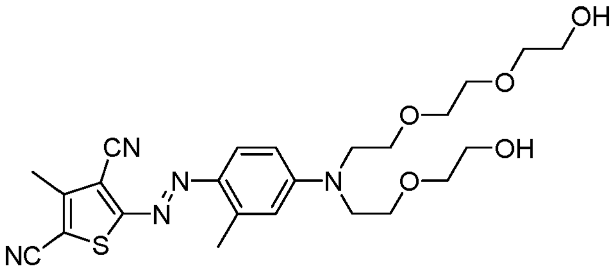

(V)

This dye is typically a mixture of compounds having an average of 3-10, preferably 5, EO groups per molecule.

Further additional shading dyes are those described in US-A-2008/034511 (Unilever). A preferred agent is "Solvent Violet 13".

Suitable dye clay conjugates include dye clay conjugates selected from at least one cationic/basic dye and a smectite clay, and mixtures thereof. In another aspect, suitable dye clay conjugates include dye clay conjugates selected from one cationic/basic dye selected from the group consisting of C.I. Basic Yellow 1 through 108, C.I. Basic Orange 1 through 69, C.I. Basic Red 1 through 118, C.I. Basic Violet 1 through 51, C.I. Basic Blue 1 through 164, C.I. Basic Green 1 through 14, C.I. Basic Brown 1 through 23, CI Basic Black 1 through 11, and a clay selected from Montmorillonite clay, Hectorite clay, Saponite clay and mixtures thereof. In still another aspect, suitable dye clay conjugates include dye clay conjugates selected from: Montmorillonite Basic Blue B7 C.I. 42595 conjugate, Montmorillonite Basic Blue B9 C.I. 52015 conjugate, Montmorillonite Basic Violet V3 C.I. 42555 conjugate, Montmorillonite Basic Green G1 C.I. 42040 conjugate, Montmorillonite Basic Red R1 C.I. 45160 conjugate, Montmorillonite C.I. Basic Black 2 conjugate, Hectorite Basic Blue B7 C.I. 42595 conjugate, Hectorite Basic Blue B9 C.I. 52015 conjugate, Hectorite Basic Violet V3 C.I. 42555 conjugate, Hectorite Basic Green G1 C.I. 42040 conjugate, Hectorite Basic Red R1 C.I. 45160 conjugate, Hectorite C.I. Basic Black 2 conjugate, Saponite Basic Blue B7 C.I. 42595 conjugate, Saponite Basic Blue B9 C.I. 52015 conjugate, Saponite

Basic Violet V3 C.I. 42555 conjugate, Saponite Basic Green G1 C.I. 42040 conjugate, Saponite Basic Red R1 C.I. 45160 conjugate, Saponite C.I. Basic Black 2 conjugate and mixtures thereof.

Suitable pigments include pigments selected from flavanthrone, indanthrone, chlorinated indanthrone containing from 1 to 4 chlorine atoms, pyranthrone, dichloropyranthrone, monobromodichloropyranthrone, dibromodichloropyranthrone, tetrabromopyranthrone, perylene-3,4,9,10-tetracarboxylic acid diimide, wherein the imide groups may be unsubstituted or substituted by $C_1$-$C_3$ -alkyl or a phenyl or heterocyclic radical, and wherein the phenyl and heterocyclic radicals may additionally carry substituents which do not confer solubility in water, anthrapyrimidinecarboxylic acid amides, violanthrone, isoviolanthrone, dioxazine pigments, copper phthalocyanine which may contain up to 2 chlorine atoms per molecule, polychloro-copper phthalocyanine or polybromochloro-copper phthalocyanine containing $\leq$ 14 bromine atoms per molecule, and mixtures thereof. Particularly preferred are Pigment Blues 15 to 20, especially Pigment Blue 15 and/or 16. Other suitable pigments include those selected from the group consisting of Ultramarine Blue (C.I. Pigment Blue 29), Ultramarine Violet (C.I. Pigment Violet 15) and mixtures thereof. Suitable hueing agents are described in more detail in US 7,208,459.

**Encapsulates**. The composition may comprise an encapsulate. In one aspect, an encapsulate comprising a core, a shell having an inner and outer surface, said shell encapsulating said core. The core may comprise any laundry care adjunct, though typically the core may comprise material selected from perfumes; brighteners; dyes; insect repellants; silicones; waxes; flavors; vitamins; fabric softening agents; skin care agents in one aspect, paraffins; enzymes; anti-bacterial agents; bleaches; sensates; and mixtures thereof; and said shell may comprise a material selected from polyethylenes; polyamides; polyvinylalcohols, optionally containing other co-monomers; polystyrenes; polyisoprenes; polycarbonates; polyesters; polyacrylates; aminoplasts, in one aspect said aminoplast may comprise a polyureas, polyurethane, and/or polyureaurethane, in one aspect said polyurea may comprise polyoxymethyleneurea and/or melamine formaldehyde; polyolefins; polysaccharides, in one aspect said polysaccharide may comprise alginate and/or chitosan; gelatin; shellac; epoxy resins; vinyl polymers; water insoluble inorganics; silicone; and mixtures thereof. Preferred encapsulates comprise perfume. Preferred encapsulates comprise a shell which may comprise melamine formaldehyde and/or cross linked melamine formaldehyde. Preferred encapsulates comprise a core material and a shell, said shell at least partially surrounding said core material, is disclosed. At least 75%, 85% or even 90% of said encapsulates may have a fracture strength of 0.2-10 MPa, and a benefit agent leakage of 0-20%, or even < 10% or < 5% based on total initial encapsulated benefit agent. Preferred are those in which at least 75%, 85% or even 90% of said encapsulates may have (i) a particle size of 1-80 $\mu$m (microns), 5-60 $\mu$m, 10-50 $\mu$m, or even 15-40 $\mu$m, and/or (ii) at least 75%, 85% or even 90% of said encapsulates may have a particle wall thickness of 30-250 nm, 80-180 nm, or even 100-160 nm. Formaldehyde scavengers may be employed with the encapsulates, for example, in a capsule slurry and/or added to a composition before, during or after the encapsulates are added to such composition. Suitable capsules that can be made by following the teaching of US-A-2008/0305982; and/or US-A-2009/0247449. Alternatively, suitable capsules can be purchased from Appleton Papers Inc. of Appleton, Wisconsin USA.

In a preferred aspect the composition may comprise a deposition aid, preferably in addition to encapsulates. Preferred deposition aids are selected from cationic and nonionic polymers. Suitable polymers include cationic starches, cationic hydroxyethylcellulose, polyvinylformaldehyde, locust bean gum, mannans, xyloglucans, tamarind gum, polyethyleneterephthalate and polymers containing dimethylaminoethyl methacrylate, optionally with one or more monomers selected from the group comprising acrylic acid and acrylamide.

**Perfume.** Preferred compositions comprise perfume. Typically the composition comprises a perfume that comprises one or more perfume raw materials, selected from the group as described in WO 08/87497. However, any perfume useful in a laundry care composition may be used. A preferred method of incorporating perfume into the compositions is via an encapsulated perfume particle comprising either a water-soluble hydroxylic compound or melamine-formaldehyde or modified polyvinyl alcohol. In one aspect the encapsulate comprises (a) an at least partially water-soluble solid matrix comprising one or more water-soluble hydroxylic compounds, preferably starch; and (b) a perfume oil encapsulated by the solid matrix. In a further aspect the perfume may be pre-complexed with a polyamine, preferably a polyethylenimine so as to form a Schiff base.

**Polymers.** The composition may comprise one or more polymers. Examples are optionally modified carboxymethylcellulose, poly(vinyl-pyrrolidone), poly (ethylene glycol), poly(vinyl alcohol), poly(vinylpyridine-N-oxide), poly(vinylimidazole), polycarboxylates such as polyacrylates, maleic/acrylic acid copolymers and lauryl methacrylate/acrylic acid co-polymers.

The composition may comprise one or more amphiphilic cleaning polymers such as the compound of the general structure: bis(($C_2H_5O$)($C_2H_4O$)n)($CH_3$)-$N^+$-$C_xH_{2x}$-$N^+$-($CH_3$)-bis(($C_2H_5O$)($C_2H_4O$)n), wherein n = 20-30, and x = 3-8, or sulphated or sulphonated variants thereof. In one aspect, this polymer is sulphated or sulphonated to provide a zwitterionic soil suspension polymer.

The composition preferably comprises amphiphilic alkoxylated grease cleaning polymers which have balanced hydrophilic and hydrophobic properties such that they remove grease particles from fabrics and surfaces. Preferred amphiphilic alkoxylated grease cleaning polymers comprise a core structure and a plurality of alkoxylate groups attached

to that core structure. These may comprise alkoxylated polyalkylenimines, preferably having an inner polyethylene oxide block and an outer polypropylene oxide block. Typically these may be incorporated into the compositions in amounts of 0.005-10 wt%, generally 0.5-8 wt%

Alkoxylated polycarboxylates such as those prepared from polyacrylates are useful herein to provide additional grease removal performance. Such materials are described in WO 91/08281. Chemically, these materials comprise polyacrylates having one ethoxy side-chain per every 7-8 acrylate units. The side-chains are of the formula $-(CH_2CH_2O)_m (CH_2)_nCH_3$ wherein m is 2-3 and n is 6-12. The side-chains are ester-linked to the polyacrylate "backbone" to provide a "comb" polymer type structure. The molecular weight can vary, but is typically in the range of about 2000-50,000. Such alkoxylated polycarboxylates can comprise from about 0.05-10 wt% of the compositions herein.

Mixtures of cosurfactants and other adjunct ingredients, are particularly suited to be used with an amphiphilic graft co-polymer. Preferred amphiphilic graft co-polymer(s) comprise (i) polyethyelene glycol backbone; and (ii) and at least one pendant moiety selected from polyvinyl acetate, polyvinyl alcohol and mixtures thereof. A preferred amphiphilic graft co-polymer is Sokalan HP22, supplied from BASF. Suitable polymers include random graft copolymers, preferably a a polyvinyl acetate grafted polyethylene oxide copolymer having a polyethylene oxide backbone and multiple polyvinyl acetate side chains. The molecular weight of the polyethylene oxide backbone is preferably about 6000 and the weight ratio of the polyethylene oxide to polyvinyl acetate is about 40-60 and no more than 1 grafting point per 50 ethylene oxide units. Typically, these are incorporated into the compositions in amounts of 0.005-10 wt%, more usually 0.05-8 wt%. Preferably the composition comprises one or more carboxylate polymer, such as a maleate/acrylate random copolymer or polyacrylate homopolymer. In one aspect, the carboxylate polymer is a polyacrylate homopolymer having a molecular weight of 4,000-9,000 Da, or 6,000-9,000 Da. Typically, these are incorporated into the compositions in amounts of 0.005-10 wt%, or 0.05-8 wt%

Preferably the composition comprises one or more soil release polymers. Examples include soil release polymers having a structure of any of the Formulae (VI), (VII) or (VIII):

(VI) $-[(OCHR^1-CHR^2)_a-O-OC-Ar-CO-]_d$

(VII) $-[(OCHR^3-CH^R4)_b-O-OC-sAr-CO-]_e$

(VIII) $-[(OCHR^5-CHR^6)_c-OR^7]_f$

wherein:

- a, b and c are 1-200;
- d, e and f are 1-50;
- Ar is a 1,4-substituted phenylene;
- sAr is 1,3-substituted phenylene substituted in position 5 with $SO_3Me$;
- Me is Li, K, Mg/2, Ca/2, Al/3, ammonium, mono-, di-, tri-, or tetraalkylammonium wherein the alkyl groups are $C_1$-$C_{18}$ alkyl or $C_2$-$C_{10}$ hydroxyalkyl, or mixtures thereof;
- $R^1$-$R^6$ each independently are H or $C_{1-18}$-(n- or iso-alkyl); and
- $R^7$ is linear or branched $C_{1-18}$-alkyl, linear or branched $C_{2-30}$-alkenyl, $C_{5-9}$-cycloalkyl, $C_{8-30}$-aryl or $C_{6-30}$-arylalkyl.

Suitable soil release polymers are polyester soil release polymers such as Repel-o-tex polymers, including Repel-o-tex SF, SF-2 and SRP6 supplied by Rhodia. Other suitable soil release polymers include Texcare polymers, including Texcare SRA100, SRA300, SRN100, SRN170, SRN240, SRN300 and SRN325 supplied by Clariant. Other suitable soil release polymers are Marloquest polymers, such as Marloquest SL supplied by Sasol.

Preferably the composition comprises one or more cellulosic polymer, including those selected from alkyl cellulose, alkyl alkoxyalkyl cellulose, carboxyalkyl cellulose, alkyl carboxyalkyl cellulose. Preferred cellulosic polymers are selected from carboxymethyl cellulose, methyl cellulose, methyl hydroxyethyl cellulose, methyl carboxymethyl cellulose, and mixures thereof. In one aspect, the carboxymethyl cellulose has a degree of carboxymethyl substitution of 0.5-0.9 and a molecular weight of 100,000-300,000 Da.

**Enzymes.** Preferably the composition comprises one or more enzymes. Preferred enzymes provide cleaning performance and/or fabric care benefits. Examples of suitable enzymes include hemicellulases, peroxidases, proteases, cellulases, xylanases, lipases, phospholipases, esterases, cutinases, pectinases, mannanases, pectate lyases, keratinases, reductases, oxidases, phenoloxidases, lipoxygenases, ligninases, pullulanases, tannases, pentosanases, malanases, β-glucanases, arabinosidases, hyaluronidase, chondroitinase, laccase, and amylases, or mixtures thereof. A typical combination is an enzyme cocktail that may comprise, for example, a protease and lipase in conjunction with amylase. When present in the composition, the aforementioned additional enzymes may be present at levels of 0.00001-2%, 0.0001-1% or even 0.001-0.5% enzyme protein by weight of the composition.

**Proteases.** Preferably the composition comprises one or more proteases. Suitable proteases include metalloproteases and serine proteases, including neutral or alkaline microbial serine proteases, such as subtilisins (EC 3.4.21.62). Suitable proteases include those of animal, vegetable or microbial origin. In one aspect, such suitable protease may be of microbial origin. The suitable proteases include chemically or genetically modified mutants of the aforementioned suitable proteases. In one aspect, the suitable protease may be a serine protease, such as an alkaline microbial protease or/and a trypsin-type protease. Examples of suitable neutral or alkaline proteases include:

(a) subtilisins (EC 3.4.21.62), including those derived from *Bacillus,* such as *Bacillus lentus, B. alkalophilus, B. subtilis, B. amyloliquefaciens, Bacillus pumilus* and *Bacillus gibsonii* described in US 6,312,936, US 5,679,630, US 4,760,025, US7,262,042 and WO 09/021867.
(b) trypsin-type or chymotrypsin-type proteases, such as trypsin (e.g., of porcine or bovine origin), including the *Fusarium* protease described in WO 89/06270 and the chymotrypsin proteases derived from *Cellumonas* described in WO 05/052161 and WO 05/052146.
(c) metalloproteases, including those derived from *Bacillus amyloliquefaciens* described in WO 07/044993.

Preferred proteases include those derived from *Bacillus gibsonii* or *Bacillus Lentus.*
Suitable commercially available protease enzymes include those sold under the trade names Alcalase®, Savinase®, Primase®, Durazym®, Polarzyme®, Kannase®, Liquanase®, Liquanase Ultra®, Savinase Ultra®, Ovozyme®, Neutrase®, Everlase® and Esperase® by Novozymes A/S (Denmark), those sold under the tradename Maxatase®, Maxacal®, Maxapem®, Properase®, Purafect®, Purafect Prime®, Purafect Ox®, FN3® , FN4®, Excellase® and Purafect OXP® by Genencor International, those sold under the tradename Opticlean® and Optimase® by Solvay Enzymes, those available from Henkel/ Kemira, namely BLAP (sequence shown in Figure 29 of US 5,352,604 with the following mutations S99D + S101 R + S103A + V104I + G159S, hereinafter referred to as BLAP), BLAP R (BLAP with S3T + V4I + V199M + V205I + L217D), BLAP X (BLAP with S3T + V4I + V205I) and BLAP F49 (BLAP with S3T + V4I + A194P + V199M + V205I + L217D) - all from Henkel/Kemira; and KAP (*Bacillus alkalophilus subtilisin* with mutations A230V + S256G + S259N) from Kao.
**Amylases.** Preferably the composition may comprise an amylase. Suitable $\alpha$-amylases include those of bacterial or fungal origin. Chemically or genetically modified mutants (variants) are included. A preferred alkaline $\alpha$-amylase is derived from a strain of *Bacillus,* such as *Bacillus licheniformis, Bacillus amyloliquefaciens, Bacillus stearothermophilus, Bacillus subtilis,* or other *Bacillus sp.,* such as *Bacillus sp.* NCIB 12289, NCIB 12512, NCIB 12513, DSM 9375 (USP 7,153,818) DSM 12368, DSMZ no. 12649, KSM AP1378 (WO 97/00324), KSM K36 or KSM K38 (EP 1,022,334). Preferred amylases include:

(a) the variants described in WO 94/02597, WO 94/18314, WO96/23874 and WO 97/43424, especially the variants with substitutions in one or more of the following positions versus the enzyme listed as SEQ ID No. 2 in WO 96/23874: 15, 23, 105, 106, 124, 128, 133, 154, 156, 181 , 188, 190, 197, 202, 208, 209, 243, 264, 304, 305, 391, 408, and 444.
(b) the variants described in US 5,856,164 and WO9 9/23211, WO 96/23873, WO00/60060 and WO 06/002643, especially the variants with one or more substitutions in the following positions versus the AA560 enzyme listed as SEQ ID No. 12 in WO 06/002643:
26, 30, 33, 82, 37, 106, 118, 128, 133, 149, 150, 160, 178, 182, 186, 193, 203, 214, 231, 256, 257, 258, 269, 270, 272, 283, 295, 296, 298, 299, 303, 304, 305, 311, 314, 315, 318, 319, 339, 345, 361, 378, 383, 419, 421, 437, 441, 444, 445, 446, 447, 450, 461, 471, 482, 484, preferably that also contain the deletions of D183 * and G184*.
(c) variants exhibiting at least 90% identity with SEQ ID No. 4 in WO 06/002643, the wild-type enzyme from *Bacillus SP722,* especially variants with deletions in the 183 and 184 positions and variants described in WO 00/60060.
(d) variants exhibiting at least 95% identity with the wild-type enzyme from *Bacillus sp.707* (SEQ ID NO:7 in US 6,093,562), especially those comprising one or more of the following mutations M202, M208, S255, R172, and/or M261. Preferably said amylase comprises one or more of M202L, M202V, M202S, M202T, M202I, M202Q, M202W, S255N and/or R172Q. Particularly preferred are those comprising the M202L or M202T mutations.
(e) variants described in WO 09/149130, preferably those exhibiting at least 90% identity with SEQ ID NO: 1 or SEQ ID NO:2 in WO 09/149130, the wild-type enzyme from *Geobacillus Stearophermophilus* or a truncated version thereof.

Suitable commercially available alpha-amylases include DURAMYL®, LIQUEZYME®, TERMAMYL®, TERMAMYL ULTRA®, NATALASE®, SUPRAMYL®, STAINZYME®, STAINZYME PLUS®, FUNGAMYL® and BAN® (Novozymes A/S, Bagsvaerd, Denmark), KEMZYM® AT 9000 Biozym Biotech Trading GmbH Wehlistrasse 27b A-1200 Wien Austria, RAPIDASE® , PURASTAR®, ENZYSIZE®, OPTISIZE HT PLUS®, POWERASE® and PURASTAR OXAM® (Genencor International Inc., Palo Alto, California) and KAM® (Kao, 14-10 Nihonbashi Kayabacho, 1-chome, Chuo-ku Tokyo 103-8210, Japan). In one aspect, suitable amylases include NATALASE®, STAINZYME® and STAINZYME PLUS®

and mixtures thereof.

**Lipases**. Preferably the composition comprises one or more lipases, including "first cycle lipases" such as those described in US 6,939,702 and US-A-2009/0217464. Preferred lipases are first-wash lipases. In one embodiment the composition comprises a first wash lipase. First wash lipases includes a lipase which is a polypeptide having an amino acid sequence which: (a) has at least 90% identity with the wild-type lipase derived from *Humicola lanuginosa* strain DSM 4109; (b) compared to said wild-type lipase, comprises a substitution of an electrically neutral or negatively charged amino acid at the surface of the three-dimensional structure within 15A of E1 or Q249 with a positively charged amino acid; and (c) comprises a peptide addition at the C-terminal; and/or (d) comprises a peptide addition at the N-terminal and/or (e) meets the following limitations: i) comprises a negative amino acid in position E210 of said wild-type lipase; ii) comprises a negatively charged amino acid in the region corresponding to positions 90-101 of said wild-type lipase; and iii) comprises a neutral or negative amino acid at a position corresponding to N94 or said wild-type lipase and/or has a negative or neutral net electric charge in the region corresponding to positions 90-101 of said wild-type lipase. Preferred arevariants of the wild-type lipase from *Thermomyces lanuginosus* comprising one or more of the T231R and N233R mutations. The wild-type sequence is the 269 amino acids (amino acids 23 - 291) of the Swissprot accession number Swiss-Prot O59952 (derived from *Thermomyces lanuginosus (Humicola lanuginosa)).* Preferred lipases would include those sold under the tradenames Lipex® and Lipolex® and Lipoclean®.

**Endoglucanases.** Other preferred enzymes include microbial-derived endoglucanases exhibiting endo-beta-1,4-glucanase activity (E.C. 3.2.1.4), including a bacterial polypeptide endogenous to a member of the genus *Bacillus* which has a sequence of at least 90%, 94%, 97% and even 99% identity to the amino acid sequence SEQ ID NO:2 in US7,141,403B2) and mixtures thereof. Suitable endoglucanases are sold under the tradenames Celluclean® and Whitezyme® (Novozymes A/S, Bagsvaerd, Denmark).

**Pectate Lyases.** Other preferred enzymes include pectate lyases sold under the tradenames Pectawash®, Pectaway®, Xpect® and mannanases sold under the tradenames Mannaway® (all from Novozymes A/S, Bagsvaerd, Denmark), and Purabrite® (Genencor International Inc., Palo Alto, California).

**Bleaching Agents.** It may be preferred for the composition to comprise one or more bleaching agents. Suitable bleaching agents other than bleaching catalysts include photobleaches, bleach activators, hydrogen peroxide, sources of hydrogen peroxide, pre-formed peracids and mixtures thereof. In general, when a bleaching agent is used, the compositions may comprise 0.1-50% or even 0.1-25% bleaching agent or mixtures of bleaching agents by weight of the subject composition. Examples of suitable bleaching agents include:

(1) photobleaches for example sulfonated zinc phthalocyanine sulfonated aluminium phthalocyanines, xanthene dyes and mixtures thereof;

(2) pre-formed peracids: Suitable preformed peracids include, but are not limited to compounds selected from pre-formed peroxyacids or salts thereof typically a percarboxylic acids and salts, percarbonic acids and salts, perimidic acids and salts, peroxymonosulfuric acids and salts, for example, Oxone ®, and mixtures thereof. Suitable examples include peroxycarboxylic acids or salts thereof, or peroxysulphonic acids or salts thereof. Typical peroxycarboxylic acid salts suitable for use herein have a chemical structure of the formula:

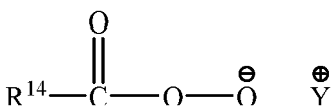

wherein $R^{14}$ is alkyl, aralkyl, cycloalkyl, aryl or a heterocyclic group; $R^{14}$ can be linear or branched, substituted or unsubstituted; having, when the peracid is hydrophobic, 6-14 or 8-12 carbon atoms and, when the peracid is hydrophilic, < 6 or even < 4 carbon atoms and Y is any suitable counter-ion that achieves electric charge neutrality, preferably Y is H, sodium or potassium. Preferably, $R^{14}$ is a linear or branched, substituted or unsubstituted $C_{6-9}$-alkyl.

Preferably, the peroxyacid or salt thereof is selected from peroxyhexanoic acid, peroxyheptanoic acid, peroxyoctanoic acid, peroxynonanoic acid, peroxydecanoic acid, any salt thereof, or any combination thereof. Particularly preferred peroxyacids are phthalimido-peroxy-alkanoic acids, in particular ε-phthalimido peroxy hexanoic acid (PAP). Preferably, the peroxyacid or salt thereof has a melting point in the range of 30-60°C.

The pre-formed peroxyacid or salt thereof can also be a peroxysulphonic acid or salt thereof, typically having a chemical structure of the formula:

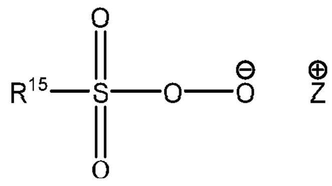

wherein: $R^{15}$ is alkyl, aralkyl, cycloalkyl, aryl or a heterocyclic group; $R^{15}$ can be linear or branched, substituted or unsubstituted; and Z is any suitable counter-ion that achieves electric charge neutrality, preferably Z is H, sodium or potassium. Preferably $R^{15}$ is a linear or branched, substituted or unsubstituted $C_{4-14}$-, preferably $C_{6-14}$-alkyl. Preferably such bleach components may be present in the compositions in an amount of 0.01-50%, most preferably 0.1-20%.

(3) sources of hydrogen peroxide, for example, inorganic perhydrate salts, including alkali metal salts such as sodium salts of perborate (usually mono- or tetra-hydrate), percarbonate, persulphate, perphosphate, persilicate salts and mixtures thereof. In one aspect the inorganic perhydrate salts are selected from sodium salts of perborate, percarbonate and mixtures thereof. When employed, inorganic perhydrate salts are typically present in amounts of 0.05-40 wt%, or 1-30 wt% of the overall fabric and home care product and are typically incorporated into such fabric and home care products as a crystalline solid that may be coated. Suitable coatings include, inorganic salts such as alkali metal silicate, carbonate or borate salts or mixtures thereof, or organic materials such as water-soluble or dispersible polymers, waxes, oils or fatty soaps; and

(4) bleach activators having R-(C=O)-L wherein R is an alkyl group, optionally branched, having, when the bleach activator is hydrophobic, 6-14 or 8-12 carbon atoms and, when the bleach activator is hydrophilic, < 6 or even < 4 carbon atoms; and L is leaving group. Examples of suitable leaving groups are benzoic acid and derivatives thereof - especially benzene sulphonate. Suitable bleach activators include dodecanoyl oxybenzene sulphonate, decanoyl oxybenzene sulphonate, decanoyl oxybenzoic acid or salts thereof, 3,5,5-trimethyl hexanoyloxybenzene sulphonate, tetraacetyl ethylene diamine (TAED) and nonanoyloxybenzene sulphonate (NOBS). Suitable bleach activators are also disclosed in WO 98/17767. While any suitable bleach activator may be employed, in one aspect the subject composition may comprise NOBS, TAED or mixtures thereof.

(5) Bleach Catalysts. The compositions may also include one or more bleach catalysts capable of accepting an oxygen atom from a peroxyacid and/or salt thereof, and transferring the oxygen atom to an oxidizeable substrate. Examples of suitable bleach catalysts include iminium cations and polyions; iminium zwitterions; modified amines; modified amine oxides; N-sulphonyl imines; N-phosphonyl imines; N-acyl imines; thiadiazole dioxides; perfluoroimines; cyclic sugar ketones and alpha amino-ketones and mixtures thereof. Suitable alpha amino ketones are for example as described in WO 2012/000846, WO 2008/015443 and WO 2008/014965. Suitable mixtures are as described in US-A-2007/0173430.

Without wishing to be bound by theory, the inventors believe that controlling the electophilicity and hydrophobicity in this above described manner enables the bleach ingredient to be delivered substantially only to areas of the fabric that are more hydrophobic, and that contain electron rich soils, including visible chromophores, that are susceptible to bleaching by highly electrophilic oxidants.

In one aspect, the bleach catalyst has a structure of the formula:

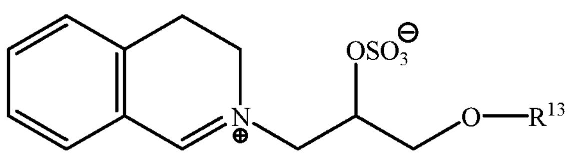

wherein $R^{13}$ is 2-ethylhexyl, 2-propylheptyl, 2-butyloctyl, 2-pentylnonyl, 2-hexyldecyl, n-dodecyl, n-tetradecyl, n-hexadecyl, n-octadecyl, iso-nonyl, iso-decyl, iso-tridecyl or iso-pentadecyl;

(6) The composition may preferably comprise catalytic metal complexes. One preferred type of metal-containing bleach catalyst is a catalyst system comprising a transition metal cation of defined bleach catalytic activity, such as copper, iron, titanium, ruthenium, tungsten, molybdenum, or manganese cations, an auxiliary metal cation having little or no bleach catalytic activity, such as zinc or aluminum cations, and a sequestrate having defined stability constants for the catalytic and auxiliary metal cations, particularly ethylenediaminetetraacetic acid, ethylenediaminetetra(methylenephosphonic acid) and water-soluble salts thereof. Such catalysts are disclosed in US 4,430,243.

If desired, the compositions herein can be catalyzed by means of a manganese compound. Such compounds

and levels of use are well known in the art and include, for example, the manganese-based catalysts disclosed in US 5,576,282.

Cobalt bleach catalysts useful herein are known, and are described, for example, in US 5,597,936 and US 5,595,967. Such cobalt catalysts are readily prepared by known procedures, such as taught for example in US 5,597,936, and US 5,595,967.

Compositions herein may also suitably include a transition metal complex of ligands such as bispidones (WO 05/042532) and/or macropolycyclic rigid ligands - abbreviated as "MRLs". As a practical matter, and not by way of limitation, the compositions and processes herein can be adjusted to provide on the order of at least one part per hundred million of the active MRL species in the aqueous washing medium, and will typically provide 0.005-25 ppm, 0.05-10 ppm, or even 0.1-5 ppm, of the MRL in the wash liquor.

Suitable transition-metals in the instant transition-metal bleach catalyst include, for example, manganese, iron and chromium. Suitable MRLs include 5,12-diethyl-1,5,8,12-tetraazabicyclo [6.6.2] hexadecane.

Suitable transition metal MRLs are readily prepared by known procedures, such as taught for example in WO 00/32601 and U.S. 6,225,464.

When present, the source of hydrogen peroxide/peracid and/or bleach activator is generally present in the composition in an amount of 0.1-60 wt%, 0.5-40 wt % or even 0.6-10 wt% based on the fabric and home care product. One or more hydrophobic peracids or precursors thereof may be used in combination with one or more hydrophilic peracid or precursor thereof.

Typically hydrogen peroxide source and bleach activator will be incorporated together. The amounts of hydrogen peroxide source and peracid or bleach activator may be selected such that the molar ratio of available oxygen (from the peroxide source) to peracid is 1:1 to 35:1, or even 2:1 to 10:1.

**Surfactant.** Preferably the composition comprises a surfactant or surfactant system. The surfactant can be selected from nonionic, anionic, cationic, amphoteric, ampholytic, amphiphilic, zwitterionic, semi-polar nonionic surfactants and mixtures thereof. Preferred compositions comprise a mixture of surfactants/surfactant system. Preferred surfactant systems comprise one or more anionic surfactants, most preferably in combination with a co-surfactant, most preferably a nonionic and/or amphoteric and/or zwitterionic surfactant. Preferred surfactant systems comprise both anionic and nonionic surfactant, preferably in weight ratios of 90:1-1:90. In some instances a weight ratio of anionic to nonionic surfactant of at least 1:1 is preferred. However a ratio below 10:1 may be preferred. When present, the total surfactant level is preferably 0.1-60%, 1-50% or even 5-40% by weight of the subject composition.

Preferably the composition comprises an anionic detersive surfactant, preferably sulphate and/or sulphonate surfactants. Preferred examples include alkyl benzene sulphonates, alkyl sulphates and alkyl alkoxylated sulphates. Preferred sulphonates are $C_{10-13}$ alkyl benzene sulphonate. Suitable alkyl benzene sulphonate (LAS) may be obtained, by sulphonating commercially available linear alkyl benzene (LAB); suitable LAB includes low 2-phenyl LAB, such as those supplied by Sasol under the tradename Isochem® or those supplied by Petresa under the tradename Petrelab®, other suitable LAB include high 2-phenyl LAB, such as those supplied by Sasol under the tradename Hyblene®. A suitable anionic detersive surfactant is alkyl benzene sulphonate that is obtained by DETAL catalyzed process, although other synthesis routes, such as HF, may also be suitable. In one aspect a magnesium salt of LAS is used.

Preferred sulphate detersive surfactants include alkyl sulphate, typically $C_{8-18}$ alkyl sulphate, or predominantly $C_{12}$ alkyl sulphate. A further preferred alkyl sulphate is alkyl alkoxylated sulphate, preferably a $C_{8-18}$ alkyl alkoxylated sulphate. Preferably the alkoxylating group is an ethoxylating group. Typically the alkyl alkoxylated sulphate has an average degree of alkoxylation of 0.5-30 or 0.5-20, or 0.5-10. Particularly preferred are $C_{8-18}$-alkyl ethoxylated sulphate having an average degree of ethoxylation of 0.5-10, 0.5-7, 0.5-5 or even 0.5-3.

The alkyl sulphate, alkyl alkoxylated sulphate and alkyl benzene sulphonates may be linear or branched, substituted or un-substituted. When the surfactant is branched, preferably the surfactant will comprise a mid-chain branched sulphate or sulphonate surfactant. Preferably the branching groups comprise $C_{1-4}$ alkyl groups, typically methyl and/or ethyl groups.

Preferably the composition comprises a nonionic detersive surfactant. Suitable non-ionic surfactants are selected from the group consisting of $C_8$-$_{18}$-alkyl ethoxylates, such as, NEODOL® non-ionic surfactants from Shell; $C_6$-$_{12}$-alkyl phenol alkoxylates wherein the alkoxylate units may be ethyleneoxy units, propyleneoxy units or a mixture thereof; $C_{12}$-$_{18}$-alcohol and $C_6$-$_{12}$-alkyl phenol condensates with ethylene oxide/propylene oxide block polymers such as Pluronic® from BASF; $C_{14}$-$C_{22}$ mid-chain branched alcohols; mid-chain branched $C_{14}$-$_{22}$-alkyl alkoxylates, typically having an average degree of alkoxylation of 1-30; alkylpolysaccharides, in one aspect, alkylpolyglycosides; polyhydroxy fatty acid amides; ether capped poly(oxyalkylated) alcohol surfactants; and mixtures thereof.

Suitable non-ionic detersive surfactants include alkyl polyglucoside and/or an alkyl alkoxylated alcohol.

In one aspect, non-ionic detersive surfactants include alkyl alkoxylated alcohols, in one aspect $C_{8-18}$ alkyl alkoxylated alcohol, for example a $C_{8-18-}$alkyl ethoxylated alcohol, the alkyl alkoxylated alcohol may have an average degree of alkoxylation of 1-80, preferably 1-50, most preferably 1-30, 1-20 or 1-10. In one aspect, the alkyl alkoxylated alcohol may be a $C_{8-18-}$alkyl ethoxylated alcohol having an average degree of ethoxylation of 1-10, 1-7, more 1-5 or 3-7,

or even < 3 or < 2. The alkyl alkoxylated alcohol can be linear or branched, and substituted or un-substituted.

Suitable nonionic surfactants include those with the tradename Lutensol® from BASF.

Suitable cationic detersive surfactants include alkyl pyridinium compounds, alkyl quaternary ammonium compounds, alkyl quaternary phosphonium compounds, alkyl ternary sulphonium compounds, and mixtures thereof.

Suitable cationic detersive surfactants are quaternary ammonium compounds having the general formula:

$$(R)(R_1)(R_2)(R_3)N^+X^-$$

wherein, R is linear or branched, substituted or unsubstituted $C_{6-18}$-alkyl or -alkenyl, $R_1$ and $R_2$ are independently methyl or ethyl, $R_3$ is hydroxyl, hydroxymethyl or hydroxyethyl, X is an anion which provides charge neutrality, suitable anions include halides, for example chloride; sulphate; and sulphonate. Suitable cationic detersive surfactants are mono-$C_{6-18}$-alkyl mono-hydroxyethyl di-methyl quaternary ammonium chlorides. Highly suitable cationic detersive surfactants are mono-$C_{8-10}$-alkyl mono-hydroxyethyl di-methyl quaternary ammonium chloride, mono-$C_{10-12}$-alkyl mono-hydroxyethyl di-methyl quaternary ammonium chloride and mono-$C_{10}$-alkyl mono-hydroxyethyl di-methyl quaternary ammonium chloride.

Suitable amphoteric/zwitterionic surfactants include amine oxides and betaines.

Amine-neutralized anionic surfactants - Anionic surfactants and adjunct anionic cosurfactants, may exist in an acid form, and said acid form may be neutralized to form a surfactant salt which is desirable for use in the present detergent compositions. Typical agents for neutralization include the metal counterion base such as hydroxides, eg, NaOH or KOH. Further preferred agents for neutralizing anionic surfactants and adjunct anionic surfactants or cosurfactants in their acid forms include ammonia, amines, or alkanolamines. Alkanolamines are preferred. Suitable non-limiting examples including monoethanolamine, diethanolamine, triethanolamine, and other linear or branched alkanolamines known in the art; for example, highly preferred alkanolamines include 2-amino-1-propanol, 1-aminopropanol, monoisopropanolamine, or 1-amino-3-propanol. Amine neutralization may be done to a full or partial extent, e.g. part of the anionic surfactant mix may be neutralized with sodium or potassium and part of the anionic surfactant mix may be neutralized with amines or alkanolamines.

**Builders.** Preferably the composition comprises one or more builders or a builder system. When a builder is used, the composition will typically comprise at least 1%, 2-60% builder. It may be preferred that the composition comprises low levels of phosphate salt and/or zeolite, for example 1-10 or 1-5 wt%. The composition may even be substantially free of strong builder; substantially free of strong builder means "no deliberately added" zeolite and/or phosphate. Typical zeolite builders include zeolite A, zeolite P and zeolite MAP. A typical phosphate builder is sodium tri-polyphosphate.

**Chelating Agent.** Preferably the composition comprises chelating agents and/or crystal growth inhibitor. Suitable molecules include copper, iron and/or manganese chelating agents and mixtures thereof. Suitable molecules include aminocarboxylates, aminophosphonates, succinates, salts thereof, and mixtures thereof. Non-limiting examples of suitable chelants for use herein include ethylenediaminetetracetates, N- (hydroxyethyl)ethylenediaminetriacetates, nitrilotriacetates, ethylenediamine tetraproprionates, triethylenetetraaminehexacetates, diethylenetriamine-pentaacetates, ethanoldiglycines, ethylenediaminetetrakis (methylenephosphonates), diethylenetriamine penta(methylene phosphonic acid) (DTPMP), ethylenediamine disuccinate (EDDS), hydroxyethanedimethylenephosphonic acid (HEDP), methylglycinediacetic acid (MGDA), diethylenetriaminepentaacetic acid (DTPA), salts thereof, and mixtures thereof. Other non-limiting examples of chelants of use are found in US 7,445,644, US 7,585,376 and US-A-2009/0176684. Other suitable chelating agents for use herein are the commercial DEQUEST series, and chelants from Monsanto, DuPont, and Nalco, Inc.

**Dye Transfer Inhibitor (DTI)**. The composition may comprise one or more dye transfer inhibiting agents. In one embodiment the inventors have surprisingly found that compositions comprising polymeric dye transfer inhibiting agents in addition to the specified dye give improved performance. This is surprising because these polymers prevent dye deposition. Examples of suitable dye transfer inhibitors include polyvinylpyrrolidone polymers, polyamine N-oxide polymers, copolymers of N-vinylpyrrolidone and N-vinylimidazole, polyvinyloxazolidones and polyvinylimidazoles or mixtures thereof. Suitable examples include PVP-K15, PVP-K30, ChromaBond S-400, ChromaBond S-403E and Chromabond S-100 from Ashland Aqualon, and Sokalan HP165, Sokalan HP50, Sokalan HP53, Sokalan HP59, Sokalan® HP 56K , Sokalan® HP 66 from BASF. Other suitable DTIs are as described in WO2012/004134. When present in a subject composition, the dye transfer inhibiting agents may be present at levels of 0.0001-10%, 0.01-5% or even 0.1-3% by weight of the composition.

**Fluorescent Brightener.** Preferably the composition comprises one or more fluorescent brightener. Commercial optical brighteners which may be useful can be classified into subgroups, examples of which include derivatives of stilbene, pyrazoline, coumarin, carboxylic acid, methinecyanines, dibenzothiophene-5,5-dioxide, azoles, 5- and 6-membered-ring heterocycles, and other miscellaneous agents. Particularly preferred brighteners are selected from: sodium 2 (4-styryl-3-sulfophenyl) -2H-napthol [1 , 2-d] triazole, disodium 4 , 4 ' -bis{ [ (4-anilino-6- (N methyl-N-2 hydroxyethyl)

amino 1 , 3 , 5-triazin-2-yl) ] amino }stilbene-2-2- disulfonate, disodium 4, 4 ' -bis{ [ (4-anilino-6-morpholino-l, 3, 5-triazin-2-yl) ] amino} stilbene-2-2 ' disulfonate, and disodium 4,4'- bis (2-sulfostyryl) biphenyl. Other examples of such brighteners are disclosed in "The Production and Application of Fluorescent Brightening Agents", M. Zahradnik, Published by John Wiley & Sons, New York (1982). Specific nonlimiting examples of optical brighteners which are useful in the present compositions are those identified in US 4,790,856 and US 3,646,015.

A preferred brightener has the structure below:

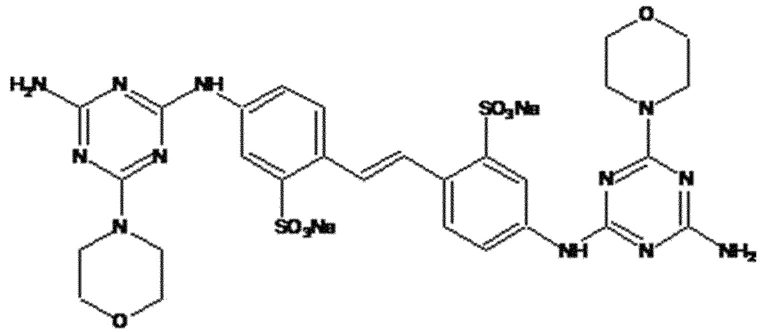

Suitable fluorescent brightener levels include lower levels of from 0.01, from 0.05, from 0.1 or even from 0.2 wt % to upper levels of 0.5 or even 0.75 wt %.

In one aspect the brightener may be loaded onto a clay to form a particle.

Preferred brighteners are totally or predominantly (typically ≥ 50wt%, ≥75wt%, ≥ 90wt%, ≥ 99wt%), in α-crystalline form. A highly preferred brightener comprises C.I. fluorescent brightener 260 having the following structure:

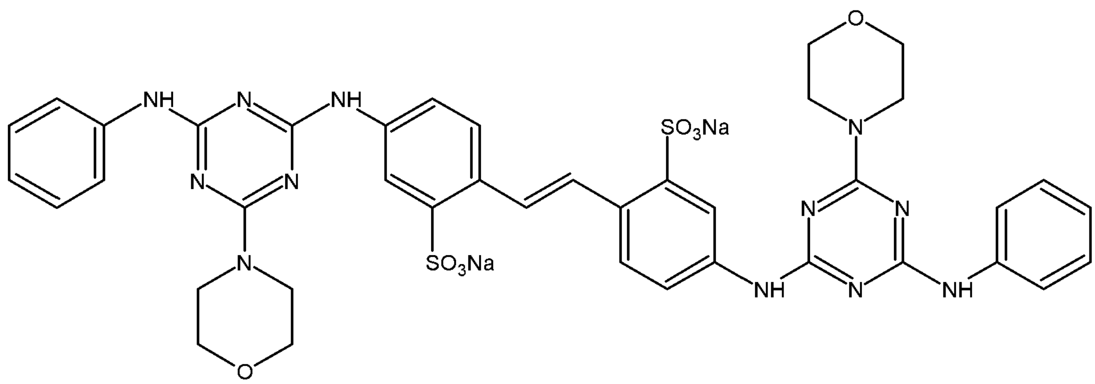

This can be particularly useful as it dissolves well in cold water, for example below 30 or 25 or even 20°C.

Preferably brighteners are incorporated in the composition in micronized particulate form, most preferably having a weight average primary particle size of 3-30 μm, 3-20 μm or 3-10 μm.

The composition may comprise C.I. fluorescent brightener 260 in β-crystalline form, and the weight ratio of (i) C.I. fluorescent brightener 260 in α-crystalline form, to (ii) C.I. fluorescent brightener 260 in β-crystalline form may be ≥ 0.1, or ≥ 0.6.

BE680847 relates to a process for making C.I fluorescent brightener 260 in α-crystalline form.

**Silicate Salts.** The composition may preferably also contain silicate salts, such as sodium or potassium silicate. The composition may comprise 0 to < 10 wt% silicate salt, or 0-9, 0-8, 0-7, 0-6, 0-5, 0-4, 0-3 or even 0-2 wt%, and preferably > 0wt%, ≥ 0.5wt%, or even ≥ 1wt% silicate salt. A suitable silicate salt is sodium silicate.

**Dispersants.** The composition may preferably also contain dispersants. Suitable water-soluble organic materials include the homo- or co-polymeric acids or their salts, in which the polycarboxylic acid comprises at least two carboxyl radicals separated from each other by not more than two carbon atoms.

**Enzyme Stabilisers.** The composition may preferably comprise enzyme stabilizers. Any conventional enzyme stabilizer may be used, for example by the presence of water-soluble sources of calcium and/or magnesium ions in the finished fabric and home care products that provide such ions to the enzymes. In case of aqueous compositions comprising protease, a reversible protease inhibitor, such as a boron compound including borate, or preferably 4-formyl phenylboronic acid, phenylboronic acid and derivatives thereof, or compounds such as calcium formate, sodium formate and 1,2-propane diol can be added to further improve stability.

**Solvent System.** The solvent system in the present compositions can be a solvent system containing water alone or mixtures of organic solvents either without or preferably with water. Preferred organic solvents include 1,2-propanediol, ethanol, glycerol, dipropylene glycol, methyl propane diol and mixtures thereof. Other lower alcohols, C1-4-alkanolamines such as monoethanolamine and triethanolamine, can also be used. Solvent systems can be absent, for example from anhydrous solid embodiments, but more typically are present at levels in the range of 0.1-98%, preferably 1-50%, more usually 5-25%.

In some embodiments, the composition is in the form of a structured liquid. Such structured liquids can either be internally structured, whereby the structure is formed by primary ingredients (e.g. surfactant material) and/or externally structured by providing a three dimensional matrix structure using secondary ingredients (e.g. polymers, clay and/or silicate material), for use e.g. as thickeners. The composition may comprise a structurant, preferably 0.01-5 wt%, 0.1-2.0 wt% structurant. Examples of suitable structurants are given in US-A-2006/0205631, US-A_2005/0203213, US 7,294,611 and US 6,855,680. The structurant is typically selected from the group consisting of diglycerides and triglycerides, ethylene glycol distearate, microcrystalline cellulose, cellulose-based materials, microfiber cellulose, hydrophobically modified alkali-swellable emulsions such as Polygel W30 (3VSigma), biopolymers, xanthan gum, gellan gum, hydrogenated castor oil, derivatives of hydrogenated castor oil such as non-ethoxylated derivatieves thereof and mixtures thereof, in particular, those selected from the group of hydrogenated castor oil, derivatives of hydrogenated castor oil, microfibullar cellulose, hydroxyfunctional crystalline materials, long chain fatty alcohols, 12-hydroxystearic acids, clays and mixtures thereof.A preferred structurant is described in US 6,855,680 which defines suitable hydroxyfunctional crystalline materials in detail. Preferred is hydrogenated castor oilSuch structurants have a thread-like structuring system having a range of aspect ratios. Other suitable structurants and the processes for making them are described in WO 2010/034736.

The composition may comprise a high melting point fatty compound. The high melting point fatty compound useful herein has a melting point of ≥ 25°C, and is selected from the group consisting of fatty alcohols, fatty acids, fatty alcohol derivatives, fatty acid derivatives, and mixtures thereof. Such compounds of low melting point are not intended to be included in this section. Non-limiting examples of the high melting point compounds are found in International Cosmetic Ingredient Dictionary, Fifth Edition, 1993, and CTFA Cosmetic Ingredient Handbook, Second Edition, 1992. When present, the high melting point fatty compound is preferably included in the composition at a level of 0.1-40%, preferably 1-30%, more preferably 1.5-16% by weight of the composition, 1.5-8% in view of providing improved conditioning benefits such as slippery feel during the application to wet hair, softness and moisturized feel on dry hair.

**Cationic Polymer.** The compositions may contain a cationic polymer. Concentrations of the cationic polymer in the composition typically are 0.05-3%, in other embodiments 0.075-2.0% and 0.1-1.0%. Suitable cationic polymers will have cationic charge densities of ≥ 0.5 meq/gm, in other embodiments ≥0.9 meq/gm, ≥ 1.2 meq/gm, ≥ 1.5 meq/gm, but in one embodiment also < 7 meq/gm, and in another embodiment < 5 meq/gm, at the pH of intended use of the composition, which pH will generally be 3-9, in one embodiment between 4 and 8. Herein, "cationic charge density" of a polymer refers to the ratio of the number of positive charges on the polymer to the molecular weight of the polymer. The average molecular weight of such suitable cationic polymers will generally be 10,000-10 million, in one embodiment 50,000-5 million, and in another embodiment 100,000-3 million.

Suitable cationic polymers for use in the compositions contain cationic nitrogen-containing moieties such as quaternary ammonium or cationic protonated amino moieties. Any anionic counterions can be used in association with the cationic polymers so long as the polymers remain soluble in water, in the composition, or in a coacervate phase of the composition, and so long as the counterions are physically and chemically compatible with the essential components of the composition or do not otherwise unduly impair product performance, stability or aesthetics. Nonlimiting examples of such counterions include halides (e.g., chloride, fluoride, bromide, iodide), sulfate and methylsulfate.

Nonlimiting examples of such polymers are described in the CTFA Cosmetic Ingredient Dictionary, 3rd edition, edited by Estrin, Crosley, and Haynes, (The Cosmetic, Toiletry, and Fragrance Association, Inc., Washington, D.C. (1982)).

Other suitable cationic polymers for use in the composition include polysaccharide polymers, cationic guar gum derivatives, quaternary nitrogen-containing cellulose ethers, synthetic polymers, copolymers of etherified cellulose, guar and starch. When used, the cationic polymers herein are either soluble in the composition or are soluble in a complex coacervate phase in the composition formed by the cationic polymer and the anionic, amphoteric and/or zwitterionic surfactant component described hereinbefore. Complex coacervates of the cationic polymer can also be formed with other charged materials in the composition.

Suitable cationic polymers are described in US 3,962,418; US 3,958,581 and US-A-2007/0207109.

**Nonionic Polymer.** The composition may include a nonionic polymer as a conditioning agent. Polyalkylene glycols having a molecular weight of > 1000 are useful herein. Useful are those having the following general formula:

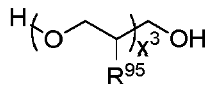

wherein R95 each individually is H or methyl. Conditioning agents, and in particular silicones, may be included in the composition. The conditioning agents useful in the compositions typically comprise a water insoluble, water dispersible, non-volatile, liquid that forms emulsified, liquid particles. Suitable conditioning agents for use in the composition are those conditioning agents characterized generally as silicones (e.g., silicone oils, cationic silicones, silicone gums, high refractive silicones, and silicone resins), organic conditioning oils (e.g., hydrocarbon oils, polyolefins, and fatty esters) or combinations thereof, or those conditioning agents which otherwise form liquid, dispersed particles in the aqueous surfactant matrix herein. Such conditioning agents should be physically and chemically compatible with the essential components of the composition, and should not otherwise unduly impair product stability, aesthetics or performance.

The concentration of the conditioning agent in the composition should be sufficient to provide the desired conditioning benefits. Such concentration can vary with e.g. the conditioning agent, the conditioning performance desired, the average size of the conditioning agent particles, and the type and concentration of other components.

The concentration of the silicone conditioning agent typically is 0.01-10%. Non-limiting examples of suitable silicone conditioning agents, and optional suspending agents for the silicone, are described in US Reissue Pat. No. 34,584, US Patents 5,104,646; 5,106,609; 4,152,416; 2,826,551; 3,964,500; 4,364,837; 6,607,717; 6,482,969; 5,807,956; 5,981,681; 6,207,782; 7,465,439; 7,041,767 and 7,217,777; US-A-2007/0286837; US-A-2005/0048549; US-A-2007/0041929; GB-B-849,433; DE-B-10036533; Chemistry and Technology of Silicones, New York: Academic Press (1968); General Electric Silicone Rubber Product Data Sheets SE 30, SE 33, SE 54 and SE 76; Silicon Compounds, Petrarch Systems, Inc. (1984); and in Encyclopedia of Polymer Science and Engineering, vol. 15, 2d ed., pp 204-308, John Wiley & Sons, Inc. (1989).

**Organic Conditioning Oil.** The compositions may also comprise 0.05-3% of at least one organic conditioning oil as the conditioning agent, either alone or in combination with other conditioning agents, such as the silicones (described herein). Suitable conditioning oils include hydrocarbon oils, polyolefins, and fatty esters. Also suitable for use in the compositions herein are the conditioning agents described by the Procter & Gamble Company in US 5,674,478 and US 5,750,122. Also suitable for use herein are those conditioning agents described in US Patents 4,529,586; 4,507,280; 4,663,158; 4,197,865; 4,217,914; 4,381,919 and 4,422,853.

**Hygiene Agent.** The compositions may also comprise components to deliver hygiene and/or malodour benefits such as one or more of zinc ricinoleate, thymol, quaternary ammonium salts such as Bardac®, polyethylenimines (such as Lupasol® from BASF) and zinc complexes thereof, silver and silver compounds, especially those designed to slowly release Ag+ or nano-silver dispersions.

**Probiotics.** The composition may comprise probiotics, such as those described in WO 2009/043709.

**Suds Boosters.** The composition may preferably comprise suds boosters if high sudsing is desired. Suitable examples are the $C_{10-16}$-alkanolamides or $C_{10-14}$-alkyl sulphates, which are preferably incorporated at 1-10% levels. The $C_{10-14}$-monoethanol and diethanol amides illustrate a typical class of such suds boosters. Use of such suds boosters with high sudsing adjunct surfactants such as the amine oxides, betaines and sultaines noted above is also advantageous. If desired, water-soluble magnesium and/or calcium salts such as MgCl2, MgSO4, CaCl2 and CaSO4, can be added at levels of, typically, 0.1-2%, to provide additional suds and to enhance grease removal performance.

**Suds Supressor.** Compounds for reducing or suppressing the formation of suds may be incorporated into the compositions. Suds suppression can be of particular importance in the so-called "high concentration cleaning process" as described in US 4,489,455 and US 4,489,574, and in front-loading -style washing machines. A wide variety of materials may be used as suds suppressors, and suds suppressors are well known to those skilled in the art. See, for example, Kirk Othmer Encyclopedia of Chemical Technology, Third Edition, Volume 7, pages 430-447 (John Wiley & Sons, Inc., 1979). Examples of suds supressors include monocarboxylic fatty acid and soluble salts therein, high molecular weight hydrocarbons such as paraffin, fatty acid esters (e.g., fatty acid triglycerides), fatty acid esters of monovalent alcohols, aliphatic $C_{18-40}$-ketones (e.g., stearone), N-alkylated amino triazines, waxy hydrocarbons preferably having a melting point below about 100°C, silicone suds suppressors, and secondary alcohols. Suds supressors are described in US Patents 2,954,347; 4,265,779; 4,265,779; 3,455,839; 3,933,672; 4,652,392; 4,978,471; 4,983,316; 5,288,431; 4,639,489; 4,749,740 and 4,798,679; 4,075,118; EP-A-0354016; EP-A-0 150 872 and DE-A-2,124,526.

For any detergent compositions to be used in automatic laundry washing machines, suds should not form to the extent that they overflow the washing machine. Suds suppressors, when utilized, are preferably present in a "suds suppressing amount. By "suds suppressing amount" is meant that the formulator of the composition can select an amount of this suds controlling agent that will sufficiently control the suds to result in a low-sudsing laundry detergent for use in automatic laundry washing machines. The compositions herein will generally comprise from 0% to 10% of suds suppressor. When utilized as suds suppressors, monocarboxylic fatty acids, and salts therein, will be present typically in

amounts up to 5 wt%, of the detergent composition. Preferably, 0.5-3% of fatty monocarboxylate suds suppressor is utilized. Silicone suds suppressors are typically utilized in amounts up to 2.0 wt%, of the detergent composition, although higher amounts may be used. Monostearyl phosphate suds suppressors are generally utilized in amounts of 0.1-2 wt% of the composition. Hydrocarbon suds suppressors are typically utilized in amounts of 0.01-5.0%, although higher levels can be used. The alcohol suds suppressors are typically used at 0.2-3 wt% of the finished compositions.

**Pearlescent Agents.** Pearlescent agents as described in WO2 011/163457 may be incorporated into the compositions.

**Perfume.** Preferably the composition comprises a perfume, preferably in the range of 0.001-3 wt%, most preferably 0.1-1 wt%. Many suitable examples of perfumes are provided in the CTFA (Cosmetic, Toiletry and Fragrance Association) 1992 International Buyers Guide, published by CFTA Publications and OPD 1993 Chemicals Buyers Directory 80$^{th}$ Annual Edition, published by Schnell Publishing Co. It is usual for a plurality of perfume components to be present in the compositions, for example four, five, six, seven or more. In perfume mixtures preferably 15-25 wt% are top notes. Top notes are defined by Poucher (Journal of the Society of Cosmetic Chemists 6(2):80 [1995]). Preferred top notes include rose oxide, citrus oils, linalyl acetate, lavender, linalool, dihydromyrcenol and cis-3-hexanol.

**Packaging.** Any conventional packaging may be used and the packaging may be fully or partially transparent so that he consumer can see the colour of the product which may be provided or contributed to by the colour of the dyes essential to the invention. UV absorbing compounds may be included in some or all of the packaging.

**Process of Making Compositions**

The compositions may be in any useful form, as described above. They may be made by any process chosen by the formulator, non-limiting examples of which are described in the examples and in US 4,990,280; US-A-2003/0087791; US-A-2003/0087790; US-A-2005/0003983; US-A_2004/0048764; US 4,762,636; US 6,291,412; US-A-2005/0227891; EP-A-1070115; US 5,879,584; US 5,691,297; US 5,574,005; US 5,569,645; US 5,565,422; US 5,516,448; US 5,489,392 and US 5,486.

When in the form of a liquid, the laundry care compositions may be aqueous (typically above 2 wt% or even above 5 or 10 wt% total water, up to 90 or up to 80wt% or 70 wt% total water) or non-aqueous (typically below 2 wt% total water content). Typically the compositions will be in the form of an aqueous solution or uniform dispersion or suspension of surfactant, shading dye, and certain optional other ingredients, some of which may normally be in solid form, that have been combined with the normally liquid components of the composition, such as the liquid alcohol ethoxylate nonionic, the aqueous liquid carrier, and any other normally liquid optional ingredients. Such a solution, dispersion or suspension will be acceptably phase stable. When in the form of a liquid, the laundry care compositions preferably have viscosity of 1-1500 mPa*s (centipoises), more preferably 100-1000 mPa*s (centipoises), and most preferably 200-500 mPa*s (centipoises) at 20s-1 and 21°C. Viscosity can be determined by conventional methods. Viscosity may be measured using an AR 550 rheometer from TA instruments using a plate steel spindle at 40 mm diameter and a gap size of 500 μm. The high shear viscosity at 20s-1 and low shear viscosity at 0.05-1 can be obtained from a logarithmic shear rate sweep from 0.1-1 to 25-1 in 3 minutes time at 21C. The preferred rheology described therein may be achieved using internal existing structuring with detergent ingredients or by employing an external rheology modifier. More preferably the laundry care compositions, such as detergent liquid compositions have a high shear rate viscosity of 00-1500 mPa*s, more preferably 100-1000 mPa*s. Unit Dose laundry care compositions, such as detergent liquid compositions have high shear rate viscosity of 400-1000 mPa*s. Laundry care compositions such as laundry softening compositions typically have high shear rate viscosity of 10-1000 mPa*s, more preferably 10-800 mPa*s , most preferably from 10 to 500 mPa*s. Hand dishwashing compositions have high shear rate viscosity of 300-4000 mPa*s, more preferably 300-1000 mPa*s.

The liquid compositions, preferably liquid detergent compositions herein can be prepared by combining the components thereof in any convenient order and by mixing, e.g., agitating, the resulting component combination to form a phase stable liquid detergent composition. In a process for preparing such compositions, a liquid matrix is formed containing at least a major proportion, or even substantially all, of the liquid components, e.g., nonionic surfactant, the non-surface active liquid carriers and other optional liquid components, with the liquid components being thoroughly admixed by imparting shear agitation to this liquid combination. For example, rapid stirring with a mechanical stirrer may usefully be employed. While shear agitation is maintained, substantially all of any anionic surfactants and the solid form ingredients can be added. Agitation of the mixture is continued, and if necessary, can be increased at this point to form a solution or a uniform dispersion of insoluble solid phase particulates within the liquid phase. After some or all of the solid-form materials have been added to this agitated mixture, particles of any enzyme material to be included, e.g., enzyme prills, are incorporated. As a variation of the composition preparation procedure hereinbefore described, one or more of the solid components may be added to the agitated mixture as a solution or slurry of particles premixed with a minor portion of one or more of the liquid components. After addition of all of the composition components, agitation of the mixture is continued for a period of time sufficient to form compositions having the requisite viscosity and phase

stability characteristics. Frequently this will involve agitation for a period of 30-60 minutes.

In one aspect of forming the liquid compositions, the dye is first combined with one or more liquid components to form a dye premix, and this dye premix is added to a composition formulation containing a substantial portion, for example > 50 wt%, more specifically > 70 wt%, and yet more specifically > 90 wt%, of the balance of components of the laundry detergent composition. For example, in the methodology described above, both the dye premix and the enzyme component are added at a final stage of component additions. In another aspect, the dye is encapsulated prior to addition to the detergent composition, the encapsulated dye is suspended in a structured liquid, and the suspension is added to a composition formulation containing a substantial portion of the balance of components of the laundry detergent composition.

**Pouches.** The composition may be provided in the form of a unitized dose, either tablet form or preferably in the form of a liquid/solid (optionally granules)/gel/paste held within a water-soluble film in what is known as a pouch or pod. The composition can be encapsulated in a single or multi-compartment pouch. Multi-compartment pouches are described in more detail in EP-A-2133410. When the composition is present in a multi-compartment pouch, the composition may be in one or two or more compartments, thus the dye may be present in one or more compartments, optionally all compartments. Non-shading dyes or pigments or other aesthetics may also be used in one or more compartments. In one embodiment the composition is present in a single compartment of a multi-compartment pouch.

Suitable film for forming the pouches is soluble or dispersible in water, and preferably has a water-solubility/dispersibility of ≥ 50%, preferably ≥ 75% or even ≥ 95%, as measured by the method set out here after using a glass-filter with a maximum pore size of 20 μm:

(50 ± 0.1) g of pouch material is added in a pre-weighed 400 ml beaker and (245 ± 1) ml of distilled water is added. This is stirred vigorously on a magnetic stirrer set at 600 rpm, for 30 minutes. Then, the mixture is filtered through a folded qualitative sintered-glass filter with a pore size as defined above (max. 20 μm). The water is dried off from the collected filtrate by any conventional method, and the weight of the remaining material is determined (which is the dissolved or dispersed fraction). Then, the percentage solubility or dispersability can be calculated. Preferred film materials are polymeric materials. The film material can be obtained, for example, by casting, blow-moulding, extrusion or blown extrusion of the polymeric material, as known in the art. Preferred polymers, copolymers or derivatives thereof suitable for use as pouch material are selected from polyvinyl alcohols, polyvinyl pyrrolidone, polyalkylene oxides, acrylamide, acrylic acid, cellulose, cellulose ethers, cellulose esters, cellulose amides, polyvinyl acetates, polycarboxylic acids and salts, polyaminoacids or peptides, polyamides, polyacrylamide, copolymers of maleic/acrylic acids, polysaccharides including starch and gelatine, natural gums such as xanthum and carragum. More preferred polymers are selected from polyacrylates and water-soluble acrylate copolymers, methylcellulose, carboxymethylcellulose sodium, dextrin, ethylcellulose, hydroxyethyl cellulose, hydroxypropyl methylcellulose, maltodextrin, polymethacrylates, and most preferably selected from polyvinyl alcohols, polyvinyl alcohol copolymers and hydroxypropyl methyl cellulose (HPMC), and combinations thereof. Preferably, the level of polymer in the pouch material, for example a PVA polymer, is ≥ 60%. The polymer can have any weight average molecular weight, preferably 1000-1,000,000, more preferably 10,000-300,000 yet more preferably 20,000-150,000. Mixtures of polymers can also be used as the pouch material. This can be beneficial to control the mechanical and/or dissolution properties of the compartments or pouch, depending on the application thereof and the required needs. Suitable mixtures include for example mixtures wherein one polymer has a higher water-solubility than another polymer, and/or one polymer has a higher mechanical strength than another polymer. Also suitable are mixtures of polymers having different weight average molecular weights, for example a mixture of PVA or a copolymer thereof of a weight average molecular weight of 10,000- 40,000, preferably around 20,000, and of PVA or copolymer thereof, with a weight average molecular weight of 100,000-300,000, preferably around 150,000. Also suitable herein are polymer blend compositions, for example comprising hydrolytically degradable and water-soluble polymer blends such as polylactide and polyvinyl alcohol, obtained by mixing polylactide and polyvinyl alcohol, typically comprising 1-35 wt% polylactide and 65-99 wt% polyvinyl alcohol. Preferred for use herein are polymers which are 60-98% hydrolysed, preferably 80-90% hydrolysed, to improve the dissolution characteristics of the material.

Naturally, different film material and/or films of different thickness may be employed in making the compartments. A benefit in selecting different films is that the resulting compartments may exhibit different solubility or release characteristics.

Most preferred film materials are PVA films known under the MonoSol trade reference M8630, M8900, H8779 and those described in US 6,166,117 and US 6,787,512 and PVA films of corresponding solubility and deformability characteristics.

The film material herein can also comprise one or more additive ingredients. For example, it can be beneficial to add plasticisers, for example glycerol, ethylene glycol, diethyleneglycol, propylene glycol, sorbitol and mixtures thereof. Other additives include functional detergent additives to be delivered to the wash water, for example organic polymeric dispersants.

## Process for Making the Water-Soluble Pouch

The compositions in pouch form may be made using any suitable equipment and method. However the multi-compartment pouches are preferably made using the horizontal form filling process. The film is preferably wetting, more preferably heated to increase the malleability thereof. Even more preferably, the method also involves the use of a vacuum to draw the film into a suitable mould. The vacuum drawing the film into the mould can be applied for 0.2-5 seconds, preferably 0.3-3 or even more preferably 0.5-1.5 seconds, once the film is on the horizontal portion of the surface. This vacuum may preferably be such that it provides an under-pressure of between -100mbar to -1000mbar, or even from -200mbar to - 600mbar.

The moulds, in which the pouches are made, can have any shape, length, width and depth, depending on the required dimensions of the pouches. The moulds can also vary in size and shape from one to another, if desirable. For example, it may be preferred that the volume of the final pouches is 5-300 ml, or even 10-150 ml or 20-100 ml and that the mould sizes are adjusted accordingly.

Heat can be applied to the film, in the process commonly known as thermoforming, by any means. For example the film may be heated directly by passing it under a heating element or through hot air, prior to feeding it onto the surface or once on the surface. Alternatively it may be heated indirectly, for example by heating the surface or applying a hot item onto the film. Most preferably the film is heated using an infra red light. The film is preferably heated to a temperature of 50-120°C, or even 60-90°C. Alternatively, the film can be wetted by any mean, for example directly by spraying a wetting agent (including water, solutions of the film material or plasticizers for the film material) onto the film, prior to feeding it onto the surface or once on the surface, or indirectly by wetting the surface or by applying a wet item onto the film.

In the case of pouches comprising powders it is advantageous to pin prick the film for a number of reasons: (a) to reduce the possibility of film defects during the pouch formation, for example film defects giving rise to rupture of the film can be generated if the stretching of the film is too fast; (b) to permit the release of any gases derived from the product enclosed in the pouch, as for example oxygen formation in the case of powders containing bleach; and/or (c) to allow the continuous release of perfume. Moreover, when heat and/or wetting is used, pin pricking can be used before, during or after the use of the vacuum, preferably during or before application of the vacuum. Preferred is thus that each mould comprises one or more holes which are connected to a system which can provide a vacuum through these holes, onto the film above the holes, as described herein in more detail.

Once a film has been heated/wetted, it is drawn into an appropriate mould, preferably using a vacuum. The filling of the moulded film can be done by any known method for filling (moving) items. The most preferred method will depend on the product form and speed of filling required. Preferably the moulded film is filled by in-line filling techniques. The filled, open pouches are then closed, using a second film, by any suitable method. Preferably, this is also done while in horizontal position and in continuous, constant motion. Preferably the closing is done by continuously feeding a second material or film, preferably water-soluble film, over and onto the web of open pouches and then preferably sealing the first film and second film together, typically in the area between the moulds and thus between the pouches.

Preferred methods of sealing include heat sealing, solvent welding, and solvent or wet sealing. It is preferred that only the area which is to form the seal, is treated with heat or solvent. The heat or solvent can be applied by any method, preferably on the closing material, preferably only on the areas which are to form the seal. If solvent or wet sealing or welding is used, it may be preferred that heat is also applied. Preferred wet or solvent sealing/ welding methods include applying selectively solvent onto the area between the moulds, or on the closing material, by for example, spraying or printing this onto these areas, and then applying pressure onto these areas, to form the seal. Sealing rolls and belts as described above (optionally also providing heat) can be used, for example.

The formed pouches can then be cut by a cutting device. Cutting can be done using any known method. It may be preferred that the cutting is also done in continuous manner, and preferably with constant speed and preferably while in horizontal position. The cutting device can, for example, be a sharp item or a hot item, whereby in the latter case, the hot item 'burns' through the film/ sealing area.

The different compartments of a multi-compartment pouch may be made together in a side-by-side style and consecutive pouches are not cut. Alternatively, the compartments can be made separately. According to this process and preferred arrangement, the pouches are made according to the process comprising the steps of

a) forming an first compartment (as described above);
b) forming a recess within some or all of the closed compartment formed in step (a), to generate a second moulded compartment superposed above the first compartment;
c) filling and closing the second compartments by means of a third film;
d) sealing said first, second and third films; and
e) cutting the films to produce a multi-compartment pouch.

Said recess formed in step b is preferably achieved by applying a vacuum to the compartment prepared in step a).

Alternatively the second, and optionally third, compartment(s) can be made in a separate step and then combined with the first compartment as described in EP-A-2088187. A particularly preferred process comprises the steps of

a) forming a first compartment, optionally using heat and/or vacuum, using a first film on a first forming machine;
b) filling said first compartment with a first composition;
c) on a second forming machine, deforming a second film, optionally using heat and vacuum, to make a second and optionally third moulded compartment;
d) filling the second and optionally third compartments;
e) sealing the second and optionally third compartment using a third film;
f) placing the sealed second and optionally third compartments onto the first compartment;
g) sealing the first, second and optionally third compartments; and
h) cutting the films to produce a multi-compartment pouch

The first and second forming machines are selected based on their suitability to perform the above process. The first forming machine is preferably a horizontal forming machine. The second forming machine is preferably a rotary drum forming machine, preferably located above the first forming machine.

It will be understood moreover that by the use of appropriate feed stations, it is possible to manufacture multi-compartment pouches incorporating a number of different or distinctive compositions and/or different or distinctive liquid, gel or paste compositions.

**Solid Form.** As noted previously, the laundry care compositions may be in a solid form. Suitable solid forms include tablets and particulate forms, for example, granular particles, flakes or sheets. Various techniques for forming detergent compositions in such solid forms are well known in the art and may be used herein. In one aspect, for example when the composition is in the form of a granular particle, the dye is provided in particulate form, optionally including additional but not all components of the laundry detergent composition. The dye particulate is combined with one or more additional particulates containing a balance of components of the laundry detergent composition. Further, the dye, optionally including additional but not all components of the laundry detergent composition, may be provided in an encapsulated form, and the shading dye encapsulate is combined with particulates containing a substantial balance of components of the laundry detergent composition. Suitable pre-mix particles for incorporation of dyes/benefit agents into laundry care compositions are described for example in WO publications 2010/084039, 2007/039042, 2010/022775, 009/132870, 2009/087033, 2007/006357, 2007/039042, 2007/096052, 2011/020991, 2006/053598, 2003/018740 and 2003/018738.

Method of Use. The compositions prepared as hereinbefore described, can be used to form aqueous washing/treatment solutions for use in the laundering/treatment of fabrics. Generally, an effective amount of such compositions is added to water, for example in a conventional fabric automatic washing machine, to form such aqueous laundering solutions. The aqueous washing solution so formed is then contacted, typically under agitation, with the fabrics to be laundered/treated therewith. An effective amount of the liquid detergent compositions herein added to water to form aqueous laundering solutions can comprise amounts sufficient to form 500-7,000 ppm of composition in aqueous washing solution, or 1,000-3,000 ppm of the detergent compositions herein will be provided in aqueous washing solution.

Typically, the wash liquor is formed by contacting the laundry care composition with wash water in such an amount so that the concentration of the laundry care composition in the wash liquor is > 0 to 5g/l, or 1 g/l to 4.5g/l, 4.0g/l, 3.5g/l, 3.0g/l, 2.5g/l, 2.0g/l, or even 1.5g/l. The method of laundering fabric or textile may be carried out in a top-loading or front-loading automatic washing machine, or can be used in a hand-wash laundry application. In these applications, the wash liquor formed and concentration of laundry detergent composition in the wash liquor is that of the main wash cycle. Any input of water during any optional rinsing step(s) is not included when determining the volume of the wash liquor.

The wash liquor may comprise ≤ 40 litres of water, or ≤ 30, ≤ 20 , ≤ 10, ≤ 8 or even ≤ 6 litres of water. The wash liquor may comprise > 0 to 15 litres, or 2-12 or even 2-8 litres of water. Typically 0.01-2 kg of fabric per litre of wash liquor is dosed into said wash liquor. Typically ≥ 0.01, ≥ 0.05, ≥ 0.07, ≥ 0.10, ≥ 0.15, ≥ 0.20, or ≥ 0.25 kg fabric per litre of wash liquor is dosed into said wash liquor. Optionally, ≤ 50 g, or ≤ 45, ≤ 40, ≤ 35, ≤ 30, ≤ 25, ≤ 20, ≤ 15 or even ≤ 10 g of the composition is contacted to water to form the wash liquor. Such compositions are typically employed at concentrations of 500-15,000 ppm in solution. When the wash solvent is water, the water temperature is typically 5-90°C and, when the situs comprises a fabric, the water to fabric ratio is typically 1:1 to 30:1. Typically the wash liquor comprising the laundry care composition has a pH of 3-11.5.

In one aspect, such method comprises the steps of optionally washing and/or rinsing said surface or fabric, contacting said surface or fabric with any composition disclosed in this specification then optionally washing and/or rinsing said surface or fabric is disclosed, with an optional drying step.

Drying of such surfaces or fabrics may be accomplished by any one of the common means employed either in domestic or industrial settings. The fabric may comprise any fabric capable of being laundered in normal consumer or institutional use conditions, and the invention is particularly suitable for synthetic textiles such as polyester and nylon

and especially for treatment of mixed fabrics and/or fibres comprising synthetic and cellulosic fabrics and/or fibres. As examples of synthetic fabrics are polyester, nylon, these may be present in mixtures with cellulosic fibres, for example, polycotton fabrics. The solution typically has a pH of 7-11, more usually 8-10.5. The compositions are typically employed at concentrations of 500-5,000 ppm in solution. The water temperatures typically is 5-90°C. The water to fabric ratio is typically 1:1 to 30:1.

Test Methods

I. Method for Determining Hueing Deposition (HD) for Dye from a Wash Solution

Unbrightened mulitfiber fabric swatches are stripped prior to use by washing at 49°C two times with heavy duty liquid laundry detergent nil brightener (1.55 g/L in aqueous solution). A concentrated stock solution of each dye to be tested is prepared in a solvent selected from dimethyl sulfoxide, ethanol or 50:50 ethanol:water. Dye stocks are added to beakers containing 400mL detergent in water (heavy duty liquid laundry detergent nil brightener, 1.55 g per liter) to produce a wash solution with an absorbance of 0.4 AU (± 0.01AU; 1.0 cm cuvette) at the $\lambda_{max}$ of the dye.

A 125mL aliquot of each wash solution is placed into three 250mL Erlenmeyer flasks, each containing four swatches. The flasks are placed on a Model 75 wrist action shaker (Burrell Scientific, Inc., Pittsburg, PA) and agitated at the maximum setting for 12 minutes, after which the wash solution is removed by aspiration, 125mL of rinse water (0 gpg) is added before agitating 4 more minutes. The rinse is removed by aspiration and the fabric swatches are spun dry (Mini Countertop Spin Dryer, The Laundry Alternative Inc., Nashua, NH) for 5 minutes, then placed in the dark to dry. L*, a*, and b* values for cotton, nylon and polyester are measured on the dry swatches using a LabScan XE reflectance spectrophotometer (HunterLabs, Reston, VA; D65 illumination, 10° observer, UV light excluded). The L*, a*, and b* values of the 12 swatches generated for each dye are averaged and the hueing deposition (HD) of each dye is calculated for each fabric type using the following equation:

$$HD = DE^* = ((L^*_c - L^*_s)^2 + (a^*_c - a^*_s)^2 + (b^*_c - b^*_s)^2)^{1/2}$$

wherein the subscripts c and s respectively refer to the control, i.e., the fabric washed in detergent with no dye, and the sample, i.e., the fabric washed in detergent containing dye.

II. Method for Determining Deposition Index (DI)

The parameters described in II. (a.) - (d.) below are calculated only when at least one of the individual deposition (HD) values for cotton, polyamide and polyester is ≥ 2.0.

a.) the Average Deposition (AHD) is calculated using the following:

$$AHD = (\text{ Cotton HD} + \text{Nylon HD} + \text{Polyester HD} ) / 3$$

b.) The Hueing Deposition Variation (DV) is calculated using the following:

$$DV = \text{Largest HD} - \text{Smallest HD}$$

c.) From the AHD and HDV we derive the Hueing Deposition Homogeneity (HDH) using the following formula: HDH = AHD / (AHD +DV) i.e. a value of 1.0 represents a perfect dye, one that deposits equally well on all three fabrics.
d.) The Hueing Deposition Index (DI) is calculated as follows:

$$DI = AHD \times HDH$$

**Examples**

Performance Example 1

The performance of Dye A (comparative) and Dye B (Example 5 from Table 1) are tested and Hueing Deposition,

Hueing Deposition Variation and Deposition Index are assessed according to the equations disclosed in the methods. The results are given in Table 2.

Both dyes show deposition across each fabric type, with similar average deposition values, but Dye B not only deposits more than Dye A, Dye B has a more even deposition profile than Dye A, as seen in the Hueing Dye Homogeneity index values, where a value of 1.0 represents a perfect dye, one that deposits equally well on all three fabrics. This results in a better hueing dye index, which is a measure that relates to the ability of the dye both to deposit well and to deposit evenly across all three fabrics.

One further problem which is alleviated by the compositions and methods described herein is that typically although the hue provided by a fabric shading dye would be identical independent of the fabric type, in practice this is not normally the case, and the hue typically shifts considerably depending on the fabric on which it resides. The compositions and methods described herein alleviate this problem: the hue shift provided is lower than that produced with prior art dyes between cellulosic and synthetic fabrics and/or fibres and between different synthetic fabrics and/or fibres.

Thus the compositions and methods provide good deposition across a range of fabrics, both extent and evenness, the consistency of the hue it imparts to those fabrics, and its ability to be removed in subsequent washes is also good, avoiding overhueing even on synthetic fabrics such as nylon.

Table 2.

| | Hueing Deposition (HD) | | | Average Hueing Deposition (AHD) | Hueing Deposition Variation (DV) | Hueing Dye Homogeneity index (HDH) |
|---|---|---|---|---|---|---|
| Dye | Cotton | Nylon | Polyester | | | |
| A (comparative) | 18.7 | 19.7 | 14.0 | 17.5 | 5.7 | 0.75 |
| B (Example 5 from Table 1) | 18.1 | 17.7 | 21.6 | 19.1 | 3.9 | 0.83 |

Examples 2-7

Granular laundry detergent compositions for hand washing or washing machines, typically top-loading washing machines.

| | **2** (wt %) | **3** (wt %) | **4** (wt %) | **5** (wt %) | **6** (wt %) | **7** (wt %) |
|---|---|---|---|---|---|---|
| Linear alkylbenzenesulfonate | 20 | 22 | 20 | 15 | 19.5 | 20 |
| $C_{12-14}$ Dimethylhydroxyethyl ammonium chloride | 0.7 | 0.2 | 1 | 0.6 | 0.0 | 0 |
| AE3 S | 0.9 | 1 | 0.9 | 0.0 | 0.4 | 0.9 |
| AE7 | 0.0 | 0.0 | 0.0 | 1 | 0.1 | 3 |
| Sodium tripolyphosphate | 5 | 0.0 | 4 | 9 | 2 | 0.0 |
| Zeolite A | 0.0 | 1 | 0.0 | 1 | 4 | 1 |
| 1.6R Silicate ($SiO_2$:$Na_2O$ at ratio 1.6:1) | 7 | 5 | 2 | 3 | 3 | 5 |
| Sodium carbonate | 25 | 20 | 25 | 17 | 18 | 19 |
| Polyacrylate MW 4500 | 1 | 0.6 | 1 | 1 | 1.5 | 1 |
| Random graft copolymer[1] | 0.1 | 0.2 | 0.0 | 0.0 | 0.05 | 0.0 |
| Carboxymethyl cellulose | 1 | 0.3 | 1 | 1 | 1 | 1 |
| Stainzyme® (20 mg active/g) | 0.1 | 0.2 | 0.1 | 0.2 | 0.1 | 0.1 |
| Protease (Savinase®, 32.89 mg active/g) | 0.1 | 0.1 | 0.1 | 0.1 | | 0.1 |
| Amylase - Natalase® (8.65 mg active /g) | 0.1 | 0.0 | 0.1 | 0.0 | 0.1 | 0.1 |

(continued)

| | **2** (wt %) | **3** (wt %) | **4** (wt %) | **5** (wt %) | **6** (wt %) | **7** (wt %) |
|---|---|---|---|---|---|---|
| Lipase - Lipex® (18 mg active /g) | 0.03 | 0.07 | 0.3 | 0.1 | 0.07 | 0.4 |
| Dye Example 5 from Table 1 | 0.01 | 0.001 | 0.003 | 0.0005 | 0.002 | 0.0009 |
| Fluorescent Brightener 1 | 0.06 | 0.0 | 0.06 | 0.18 | 0.06 | 0.06 |
| Fluorescent Brightener 2 | 0.1 | 0.06 | 0.1 | 0.0 | 0.1 | 0.1 |
| DTPA | 0.6 | 0.8 | 0.6 | 0.25 | 0.6 | 0.6 |
| $MgSO_4$ | 1 | 1 | 1 | 0.5 | 1 | 1 |
| Sodium Percarbonate | 0.0 | 5.2 | 0.1 | 0.0 | 0.0 | 0.0 |
| Sodium Perborate Monohydrate | 4.4 | 0.0 | 3.85 | 2.09 | 0.78 | 3.63 |
| NOBS | 1.9 | 0.0 | 1.66 | 0.0 | 0.33 | 0.75 |
| TAED | 0.58 | 1.2 | 0.51 | 0.0 | 0.015 | 0.28 |
| Sulphonated zinc phthalocyanine | 0.0030 | 0.0 | 0.0012 | 0.0030 | 0.0021 | 0.0 |
| S-ACMC | 0.1 | 0.0 | 0.0 | 0.0 | 0.06 | 0.0 |
| Direct Violet Dye (DV9 or DV99 or DV66) | 0.0 | 0.0 | 0.0003 | 0.0001 | 0.0001 | 0.0 |
| Sulfate/Moisture | Balance | | | | | |

Examples 8-13

Granular laundry detergent compositions typically for front-loading automatic washing machines.

| | **8** (wt%) | **9** (wt%) | **10** (wt%) | **11** (wt%) | **12** (wt%) | **13** (wt%) |
|---|---|---|---|---|---|---|
| Linear alkylbenzenesulfonate | 8 | 7.1 | 7 | 6.5 | 7.5 | 7.5 |
| AE3S | 0 | 4.8 | 1.0 | 5.2 | 4 | 4 |
| C12-14 Alkylsulfate | 1 | 0 | 1 | 0 | 0 | 0 |
| AE7 | 2.2 | 0 | 2.2 | 0 | 0 | 0 |
| $C_{10-12}$ Dimethyl hydroxyethylammonium chloride | 0.75 | 0.94 | 0.98 | 0.98 | 0 | 0 |
| Crystalline layered silicate ($\delta$-$Na_2Si_2O_5$) | 4.1 | 0 | 4.8 | 0 | 0 | 0 |
| Zeolite A | 5 | 0 | 5 | 0 | 2 | 2 |
| Citric Acid | 3 | 5 | 3 | 4 | 2.5 | 3 |
| Sodium Carbonate | 15 | 20 | 14 | 20 | 23 | 23 |
| Silicate 2R ($SiO_2$:$Na_2O$ at ratio 2:1) | 0.08 | 0 | 0.11 | 0 | 0 | 0 |
| Soil release agent | 0.75 | 0.72 | 0.71 | 0.72 | 0 | 0 |
| Acrylic Acid/Maleic Acid Copolymer | 1.1 | 3.7 | 1.0 | 3.7 | 2.6 | 3.8 |
| Carboxymethylcellulose | 0.15 | 1.4 | 0.2 | 1.4 | 1 | 0.5 |
| Protease - Purafect® (84 mg active/g) | 0.2 | 0.2 | 0.3 | 0.15 | 0.12 | 0.13 |
| Amylase - Stainzyme Plus® (20 mg active/g) | 0.2 | 0.15 | 0.2 | 0.3 | 0.15 | 0.15 |
| Lipase - Lipex® (18.00 mg active/g) | 0.05 | 0.15 | 0.1 | 0 | 0 | 0 |

(continued)

| | **8** (wt%) | **9** (wt%) | **10** (wt%) | **11** (wt%) | **12** (wt%) | **13** (wt%) |
|---|---|---|---|---|---|---|
| Amylase - Natalase® (8.65 mg active/g) | 0.1 | 0.2 | 0 | 0 | 0.15 | 0.15 |
| Cellulase - Celluclean™ (15.6 mg active/g) | 0 | 0 | 0 | 0 | 0.1 | 0.1 |
| Dye Example 5 of Table 1 | 0.01 | 0.006 | 0.008 | 0.007 | 0.02 | 0.005 |
| TAED | 3.6 | 4.0 | 3.6 | 4.0 | 2.2 | 1.4 |
| Percarbonate | 13 | 13.2 | 13 | 13.2 | 16 | 14 |
| Na salt of Ethylenediamine-N,N'-disuccinic acid, (S,S) isomer (EDDS) | 0.2 | 0.2 | 0.2 | 0.2 | 0.2 | 0.2 |
| Hydroxyethane di phosphonate (HEDP) | 0.2 | 0.2 | 0.2 | 0.2 | 0.2 | 0.2 |
| $MgSO_4$ | 0.42 | 0.42 | 0.42 | 0.42 | 0.4 | 0.4 |
| Perfume | 0.5 | 0.6 | 0.5 | 0.6 | 0.6 | 0.6 |
| Suds suppressor agglomerate | 0.05 | 0.1 | 0.05 | 0.1 | 0.06 | 0.05 |
| Soap | 0.45 | 0.45 | 0.45 | 0.45 | 0 | 0 |
| Sulphonated zinc phthalocyanine (active) | 0.0007 | 0.0012 | 0.0007 | 0 | 0 | 0 |
| S-ACMC | 0.01 | 0.01 | 0 | 0.01 | 0 | 0 |
| Direct Violet 9 (active) | 0 | 0 | 0.0001 | 0.0001 | 0 | 0 |
| Sulfate/ Water & Miscellaneous | Balance | | | | | |

Any of the above compositions is used to launder fabrics at a concentration of 7000-10000 ppm in water, 20-90$^{O}$C, and a 5:1 water:cloth ratio. The typical pH is about 10. The fabrics are then dried. In one aspect, the fabrics are actively dried using a dryer. In one aspect, the fabrics are actively dried using an iron. In another aspect, the fabrics are merely allowed to dry on a line wherein they are exposed to air and optionally sunlight.

Examples 14-20 Heavy Duty Liquid laundry detergent compositions

| | **14** (wt%) | **15** (wt%) | **16** (wt%) | **17** (wt%) | **18** (wt%) | **19** (wt %) | **20** (wt%) |
|---|---|---|---|---|---|---|---|
| AES $C_{12-15}$ alkyl ethoxy (1.8) sulfate | 11 | 10 | 4 | 6.32 | 0 | 0 | 0 |
| AE3 S | 0 | 0 | 0 | 0 | 2.4 | 0 | 0 |
| Linear alkyl benzene sulfonate/sulfonic acid | 1.4 | 4 | 8 | 3.3 | 5 | 8 | 19 |
| HSAS | 3 | 5.1 | 3 | 0 | 0 | 0 | 0 |
| Sodium formate | 1.6 | 0.09 | 1.2 | 0.04 | 1.6 | 1.2 | 0.2 |
| Sodium hydroxide | 2.3 | 3.8 | 1.7 | 1.9 | 1.7 | 2.5 | 2.3 |
| Monoethanolamine | 1.4 | 1.49 | 1.0 | 0.7 | 0 | 0 | to pH 8.2 |
| Diethylene glycol | 5.5 | 0.0 | 4.1 | 0.0 | 0 | 0 | 0 |
| AE9 | 0.4 | 0.6 | 0.3 | 0.3 | 0 | 0 | 0 |
| AE8 | 0 | 0 | 0 | 0 | 0 | 0 | 20.0 |
| AE7 | 0 | 0 | 0 | 0 | 2.4 | 6 | 0 |

(continued)

| | 14 (wt%) | 15 (wt%) | 16 (wt%) | 17 (wt%) | 18 (wt%) | 19 (wt %) | 20 (wt%) |
|---|---|---|---|---|---|---|---|
| Chelant (HEDP) | 0.15 | 0.15 | 0.11 | 0.07 | 0.5 | 0.11 | 0.8 |
| Citric Acid | 2.5 | 3.96 | 1.88 | 1.98 | 0.9 | 2.5 | 0.6 |
| $C_{12-14}$ dimethyl Amine Oxide | 0.3 | 0.73 | 0.23 | 0.37 | 0 | 0 | 0 |
| $C_{12-18}$ Fatty Acid | 0.8 | 1.9 | 0.6 | 0.99 | 1.2 | 0 | 15.0 |
| 4-formyl-phenylboronic acid | 0 | 0 | 0 | 0 | 0.05 | 0.02 | 0.01 |
| Borax | 1.43 | 1.5 | 1.1 | 0.75 | 0 | 1.07 | 0 |
| Ethanol | 1.54 | 1.77 | 1.15 | 0.89 | 0 | 3 | 7 |
| bis(($C_2H_5O$)($C_2H_4O$)n) ($CH_3$)-$N^+$-$C_xH_{2x}$-$N^+$-($CH_3$)-bis(($C_2H_5O$)($C_2H_4O$) n), (n = 20-30, x = 3-8), or sulphated or sulphonated variants thereof | 0.1 | 0 | 0 | 0 | 0 | 0 | 2.0 |
| Ethoxylated ($EO_{15}$) tetraethylene pentamine | 0.3 | 0.33 | 0.23 | 0.17 | 0.0 | 0.0 | 0 |
| Ethoxylated Polyethylenimine [2] | 0 | 0 | 0 | 0 | 0 | 0 | 0.8 |
| Ethoxylated hexamethylene diamine | 0.8 | 0.81 | 0.6 | 0.4 | 1 | 1 | |
| 1,2-Propanediol | 0.0 | 6.6 | 0.0 | 3.3 | 0.5 | 2 | 8.0 |
| Fluorescent Brightener | 0.2 | 0.1 | 0.05 | 0.3 | 0.15 | 0.3 | 0.2 |
| Hydrogenated castor oil derivative structurant | 0.1 | 0 | 0 | 0 | 0 | 0 | 0.1 |
| Perfume | 1.6 | 1.1 | 1.0 | 0.8 | 0.9 | 1.5 | 1.6 |
| Core Shell Melamine-formaldehyde encapsulate of perfume | 0.10 | 0.05 | 0.01 | 0.02 | 0.1 | 0.05 | 0.1 |
| Protease (40.6 mg active/g) | 0.8 | 0.6 | 0.7 | 0.9 | 0.7 | 0.6 | 1.5 |
| Mannanase: Mannaway® (25 mg active/g) | 0.07 | 0.05 | 0.045 | 0.06 | 0.04 | 0.04 5 | 0.1 |
| Amylase: Stainzyme® (15 mg active/g) | 0.3 | 0 | 0.3 | 0.1 | 0 | 0.4 | 0.1 |
| Amylase: Natalase® (29 mg active/g) | 0 | 0.2 | 0.1 | 0.15 | 0.07 | 0 | 0.1 |
| Xyloglucanase (Whitezyme®, 20mg active/g) | 0.2 | 0.1 | 0 | 0 | 0.05 | 0.05 | 0.2 |
| Lipex® (18 mg active/g) | 0.4 | 0.2 | 0.3 | 0.1 | 0.2 | 0 | 0 |
| Dye Example 5 from Table 1 | 0.006 | 0.002 | 0.001 | 0.01 | 0.005 | 0.00 3 | 0.004 |
| *Water, dyes & minors | Balance | | | | | | |
| * Based on total cleaning and/or treatment composition weight, a total of ≤ 12% water Examples 21-25 Unit Dose Compositions | | | | | | | |

This Example provides various formulations for unit dose laundry detergents. Such unit dose formulations can comprise one or multiple compartments.

| Ingredients | 21 | 22 | 23 | 24 | 25 |
|---|---|---|---|---|---|
| Alkylbenzene sulfonic acid C 11-13, 23.5% 2-phenyl isomer | 14.5 | 14.5 | 14.5 | 14.5 | 14.5 |

(continued)

| Ingredients | 21 | 22 | 23 | 24 | 25 |
|---|---|---|---|---|---|
| $C_{12-14}$ alkyl ethoxy 3 sulfate | 7.5 | 7.5 | 7.5 | 7.5 | 7.5 |
| $C_{12-14}$ alkyl 7-ethoxylate | 13.0 | 13.0 | 13.0 | 13.0 | 13.0 |
| Citric Acid | 0.6 | 0.6 | 0.6 | 0.6 | 0.6 |
| Fatty Acid | 14.8 | 14.8 | 14.8 | 14.8 | 14.8 |
| Enzymes (as % raw material not active) | 1.7 | 1.7 | 1.7 | 1.7 | 1.7 |
| Ethoxylated Polyethylenimine[1] | 4.0 | 4.0 | 4.0 | 4.0 | 4.0 |
| Dye Example 5 (Table 1) | 0.005 | 0.006 | 0.003 | 0.001 | 0.1 |
| Hydroxyethane diphosphonic acid | 1.2 | 1.2 | 1.2 | 1.2 | 1.2 |
| Brightener | 0.3 | 0.3 | 0.3 | 0.3 | 0.3 |
| P-diol | 15.8 | 13.8 | 13.8 | 13.8 | 13.8 |
| Glycerol | 6.1 | 6.1 | 6.1 | 6.1 | 6.1 |
| MEA | 8.0 | 8.0 | 8.0 | 8.0 | 8.0 |
| TIPA | - | - | 2.0 | - | - |
| TEA | - | 2.0 | - | - | - |
| Cumene sulphonate | - | - | - | - | 2.0 |
| cyclohexyl dimethanol | - | - | - | 2.0 | - |
| Water | 10 | 10 | 10 | 10 | 10 |
| Structurant | 0.14 | 0.14 | 0.14 | 0.14 | 0.14 |
| Perfume | 1.9 | 1.9 | 1.9 | 1.9 | 1.9 |
| Buffers (monoethanolamine) | To pH 8.0 | | | | |
| Solvents (1,2 propanediol, ethanol) | To 100% | | | | |

Examples 26-33 Multiple Compartment Unit Dose Compositions

Multiple compartment unit dose laundry detergent formulations are provided below. In these examples the unit dose has three compartments, but similar compositions can be made with two, four or five compartments. The film used to encapsulate the compartments is polyvinyl alcohol.

| Base Composition | 26 | 27 | 28 | 29 |
|---|---|---|---|---|
| **Ingredients %** | | | | |
| Glycerol | 5.3 | 5.0 | 5.0 | 4.2 |
| 1,2-propanediol | 10.0 | 15.3 | 17.5 | 16.4 |
| Citric Acid | 0.5 | 0.7 | 0.6 | 0.5 |
| Monoethanolamine | 10.0 | 8.1 | 8.4 | 7.6 |
| Caustic soda | - | - | - | - |
| Hydroxyethane diphosphonic acid | 1.1 | 2.0 | 0.6 | 1.5 |
| Polyethylene glycol | 0 | 0 | 2.5 | 3.0 |
| Potassium sulfite | 0.2 | 0.3 | 0.5 | 0.7 |
| Nonionic Marlipal $C24EO_7$ | 20.1 | 14.3 | 13.0 | 18.6 |

(continued)

| Base Composition | **26** | **27** | **28** | **29** |
|---|---|---|---|---|
| **Ingredients %** | | | | |
| HLAS | 24.6 | 18.4 | 17.0 | 14.8 |
| Fluorescent Brightener 1 +/or 2 | 0.2 | 0.2 | 0.02 | 0.3 |
| Enzymes: protease, amylase, mannanase, lipase, cellulose and/or pectate lyase | 1.5 | 1.5 | 1.0 | 0.4 |
| C12-15 Fatty acid | 16.4 | 6.0 | 11.0 | 13.0 |
| bis(($C_2H_5O$)($C_2H_4O$)n)($CH_3$)-$N^+$-$C_xH_{2x}$-$N^+$-($CH_3$)-bis(($C_2H_5O$)($C_2H_4O$)n), wherein n = from 20 to 30, and x = from 3 to 8, or sulphated or sulphonated variants thereof | 2.9 | 0.1 | 0 | 0 |
| Polyethyleneimine ethoxylate PEI600 E20 | 1.1 | 5.1 | 2.5 | 4.2 |
| Cationic cellulose polymer | 0 | 0 | 0.3 | 0.5 |
| Random graft copolymer | 0 | 1.5 | 0.3 | 0.2 |
| $MgCl_2$ | 0.2 | 0.2 | 0.1 | 0.3 |
| Structurant | 0.2 | 0.12 | 0.2 | 0.2 |
| Perfume (may include perfume microcapsules) | 0.1 | 0.3 | 0.01 | 0.05 |
| Solvents (1,2 propanediol, ethanol) and optional aesthetics | To 100% | To 100% | To 100% | To 100% |

| **Composition** | **30** | | | | **31** | | |
|---|---|---|---|---|---|---|---|
| Compartment | A | B | C | | A | B | C |
| Volume of each compartment | 40 ml | 5 ml | 5 ml | | 40 ml | 5 ml | 5 ml |
| Active material (wt.%) | | | | | | | |
| Perfume | 1.6 | 1.6 | 1.6 | | 1.6 | 1.6 | 1.6 |
| Example 5 dye of Table 1 | 0 | 0.006 | 0 | | 0 | 0 | 0.04 |
| TiO2 | - | - | - | | - | 0.1 | - |
| Sodium Sulfite | 0.4 | 0.4 | 0.4 | | 0.3 | 0.3 | 0.3 |
| Acusol 305, Rohm&Haas | - | | | | 2 | - | - |
| Hydrogenated castor oil | 0.14 | 0.14 | 0.14 | | 0.14 | 0.14 | 0.14 |
| **Base Composition 26, 27, 28 or 29** | Add to 100% | Add to 100% | Add to 100% | | Add to 100% | Add to 100% | Add to 100% |

| **Composition** | **32** | | | | **33** | | |
|---|---|---|---|---|---|---|---|
| Compartment | A | B | C | | A | B | C |
| Volume of each compartment | 40 ml | 5 ml | 5 ml | | 40 ml | 5 ml | 5 ml |
| Active material in Wt.% | | | | | | | |
| Perfume | 1.6 | 1.6 | 1.6 | | 1.6 | 1.6 | 1.6 |

(continued)

| Composition | 32 | | | | 33 | | |
|---|---|---|---|---|---|---|---|
| Compartment | A | B | C | | A | B | C |
| Dye Example 5 from Table 1 | 0 | 0 | < 0.05 | | < 0.01 | 0 | 0 |
| TiO2 | 0.1 | - | - | | - | 0.1 | - |
| Sodium Sulfite | 0.4 | 0.4 | 0.4 | | 0.3 | 0.3 | 0.3 |
| Acusol 305, Rohm&Haas | 1.2 | | | | 2 | - | - |
| Hydrogenated castor oil | 0.14 | 0.14 | 0.14 | | 0.14 | 0.14 | 0.14 |
| **Base Composition 26, 27, 28, 29** | Add to 100% | Add to 100% | Add to 100% | | Add to 100% | Add to 100% | Add to 100% |

**Example 34**

**Bleach & Laundry Additive Detergent Formulations**

| Ingredients | A | B | C | D | E | F |
|---|---|---|---|---|---|---|
| AES[1] | 11.3 | 6.0 | 15.4 | 16.0 | 12.0 | 10.0 |
| LAS[2] | 25.6 | 12.0 | 4.6 | - | - | 26.1 |
| MEA-HSAS[3] | - | - | - | 3.5 | - | - |
| DTPA: Diethylene triamine pentaacetic acid | 0.51 | - | 1.5 | - | - | 2.6 |
| 4,5-Dihydroxy-1,3-benzene-disulfonic acid disodium salt | 1.82 | - | - | - | - | 1.4 |
| 1,2-propandiol | - | 10 | - | - | - | 15 |
| Copolymer of dimethyl-terephthalate, 1,2-propylene glycol, methyl capped PEG | 2.0 | | | | | |
| Poly(ethyleneimine) ethoxylated, PEI600 E20 | | 1.8 | | | | |
| Acrylic acid/maleic acid copolymer | | | 2.9 | | | |
| Acusol 880 (Hydrophobically Modified Non-Ionic Polyol) | | | | 2.0 | 1.8 | 2.9 |
| Protease (55mg/g active) | - | - | - | - | 0.1 | 0.1 |
| Amylase (30mg/g active) | - | - | - | - | - | 0.02 |
| Perfume | - | 0.2 | 0.03 | 0.17 | - | 0.15 |
| Brightener | 0.21 | - | - | 0.15 | - | 0.18 |
| (mixture of) dye(s) selected from Examples 1-28 in Table 1 | 0.01 | 0.005 | 0.006 | 0.002 | 0.007 | 0.008 |

(continued)

| Ingredients | A | B | C | D | E | F |
|---|---|---|---|---|---|---|
| water, other optional agents/ components* | to 100% balance | to 100% balance | to 100% balance | to 100% balance | to 100% balance | to 100% balance |
| *Other optional agents/components include suds suppressors, structuring agents such as those based on Hydrogenated Castor Oil (preferably Hydrogenated Castor Oil, Anionic Premix), solvents and/or Mica pearlescent aesthetic enhancer. | | | | | | |

Raw Materials and Notes for Composition Examples

All examples show dye Example 5 from Table 1. This dye can be replaced or used in admixture with any other dye of the specified structure, particularly any dye from Examples 1 to 28 from Table 1.

LAS is linear alkylbenzenesulfonate having an average aliphatic carbon chain length of $C_{9-15}$ supplied by Stepan, Northfield, Illinois, USA or Huntsman Corp. (HLAS is acid form).
$C_{12-14}$ Dimethylhydroxyethyl ammonium chloride, supplied by Clariant GmbH, Germany AE3S is $C_{12-15}$-alkyl ethoxy (3) sulfate supplied by Stepan, Northfield, Illinois, USA
AE7 is $C_{12-15}$-alcohol ethoxylate, with an average degree of ethoxylation of 7, supplied by Huntsman, Salt Lake City, Utah, USA
AES is $C_{10-18}$-alkyl ethoxy sulfate supplied by Shell Chemicals.
AE9 is $C_{12-13}$-alcohol ethoxylate, with an average degree of ethoxylation of 9, supplied by Huntsman, Salt Lake City, Utah, USA
HSAS or HC1617HSAS is a mid-branched primary alkyl sulfate with average carbon chain length of about 16-17
Sodium tripolyphosphate is supplied by Rhodia, Paris, France
Zeolite A is supplied by Industrial Zeolite (UK) Ltd, Grays, Essex, UK
1.6R Silicate is supplied by Koma, Nestemica, Czech Republic
Sodium Carbonate is supplied by Solvay, Houston, Texas, USA
Polyacrylate MW 4500 is supplied by BASF, Ludwigshafen, Germany
Carboxymethyl cellulose is Finnfix® V supplied by CP Kelco, Arnhem, Netherlands
Suitable chelants are, for example, diethylenetetraamine pentaacetic acid (DTPA) supplied by Dow Chemical, Midland, Michigan, USA or Hydroxyethane di phosphonate (HEDP) supplied by Solutia, St Louis, Missouri, USA Bagsvaerd, Denmark
Savinase®, Natalase®, Stainzyme®, Lipex®, Celluclean™, Mannaway® and Whitezyme® are all products of Novozymes, Bagsvaerd, Denmark.
Proteases may be supplied by Genencor International, Palo Alto, California, USA (e.g. Purafect Prime®) or by Novozymes, Bagsvaerd, Denmark (e.g. Liquanase®, Coronase®).
Fluorescent Brightener 1 is Tinopal® AMS, Fluorescent Brightener 2 is Tinopal® CBS-X, Sulphonated zinc phthalocyanine and Direct Violet 9 is Pergasol® Violet BN-Z all supplied by Ciba Specialty Chemicals, Basel, Switzerland
Sodium percarbonate supplied by Solvay, Houston, Texas, USA
Sodium perborate is supplied by Degussa, Hanau, Germany
NOBS is sodium nonanoyloxybenzenesulfonate, supplied by Future Fuels, Batesville, USA
TAED is tetraacetylethylenediamine, supplied under the Peractive® brand name by Clariant GmbH, Sulzbach, Germany
S-ACMC is carboxymethylcellulose conjugated with C.I. Reactive Blue 19, sold by Megazyme, Wicklow, Ireland under the product name AZO-CM-CELLULOSE, product code S-ACMC.
Soil release agent is Repel-o-tex® PF, supplied by Rhodia, Paris, France
Acrylic Acid/Maleic Acid Copolymer is molecular weight 70,000 and acrylate:maleate ratio 70:30, supplied by BASF, Ludwigshafen, Germany
Na salt of Ethylenediamine-N,N'-disuccinic acid, (S,S) isomer (EDDS) is supplied by Octel, Ellesmere Port, UK
Hydroxyethane di phosphonate (HEDP) is supplied by Dow Chemical, Midland, Michigan, USA Suds suppressor agglomerate is supplied by Dow Corning, Midland, Michigan, USA
HSAS is mid-branched alkyl sulfate as disclosed in US 6,020,303 and US 6,060,443
$C_{12-14}$ dimethyl Amine Oxide is supplied by Procter & Gamble Chemicals, Cincinnati, USA
Random graft copolymer is a polyvinyl acetate grafted polyethylene oxide copolymer having a polyethylene oxide backbone and multiple polyvinyl acetate side chains. The molecular weight of the polyethylene oxide backbone is

about 6000 and the weight ratio of the polyethylene oxide to polyvinyl acetate is about 40:60 and no more than 1 grafting point per 50 ethylene oxide units. Ethoxylated polyethyleneimine is polyethyleneimine (MW = 600) with 20 ethoxylate groups per -NH.

Cationic cellulose polymer is LK400, LR400 and/or JR30M from Amerchol Corporation, Edgewater NJ

Note: all enzyme levels are expressed as % enzyme raw material

## Claims

**1.** A compound which is a thiophene azo carboxylate dye of formula (I):

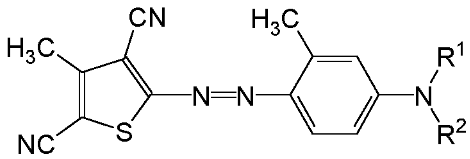

(I)

wherein

$R^1$, $R^2$ each independently are $[(CH_2CR'HO)_x(CH_2CR''HO)_yQ]$;
R' is H, $C_{1-4}$-alkyl, $CH_2O(CH_2CH_2O)_zQ$, phenyl or $CH_2OR^5$;
R" is H, $C_{1-4}$-alkyl, $CH_2O(CH_2CH_2O)_zQ$, phenyl or $CH_2OR^5$;
(x+y) is in the range of 1-50;
y is $\geq 1$;
z is in the range of 0-20;
$R^5$ each is linear or branched $C_{1-16}$-alkyl, $C_{6-14}$-aryl or $C_{7-16}$-arylalkyl;
Q is H or Y; wherein Y is a group of formula (II)

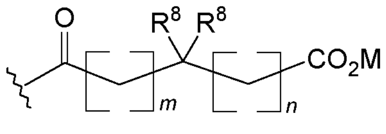

(II)

wherein independently for each group Y, M is H or a charge balancing cation; *m* is 0-5; n is 0-5; and (m+n) is 1-10; and $R^8$ each independently is H or $C_{3-18}$-alkenyl, and at least one $R^8$ is not H;

with the provisos that

(i) the dye comprises at least one group Q that is Y, and
(ii) the compound of the following formula is excluded:

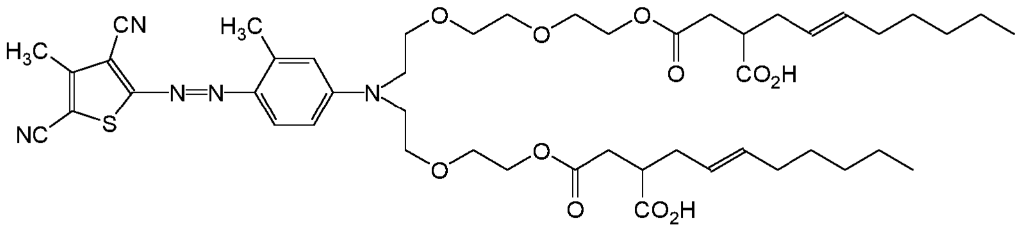

.

**2.** The compound of claim 1 wherein (x+y) is in the range of 2-50, preferably 2-25, and more preferably 2-10.

**3.** The compound of claim 1 or 2 wherein z is in the range of 0-10, and preferably 0-5

**4.** The compound of any of claims 1-3, wherein each $R^5$ is selected from methyl, ethyl, propyl, isopropyl, butyl, sec-butyl, isobutyl, t-butyl, hexyl, 2-ethylhexyl, octyl, decyl, dodecyl, tetradecyl, hexadecyl, phenyl, benzyl, 2-phenylethyl

and naphthyl.

5. The compound of any of claims 1-4, wherein m in formula (II) is 0, 1, 2 or 3.

6. The compound of any of claims 1-5, wherein n in formula (II) is 0, 1, 2 or 3.

7. The compound of any of claims 1-6, wherein (m+n) in formula (II) is 1, 2 or 3.

8. The compound of any of claims 1-7, wherein $R^8$ each independently is H or $C_{4-18}$-alkenyl.

9. The compound of any of claims 1-8 wherein

(a) $R^1$ and $R^2$ are independently selected from $[(CH_2CR'HO)_x(CH_2CR''HO)_yQ]$, wherein

R' is H, $CH_3$ or $CH_2O(CH_2CH_2O)_zQ$;
R" is H or $CH_2O(CH_2CH_2O)_zQ$;
(x+y) is $\leq 5$; and
z is 0-5; or

(b) $R^1$ and $R^2$ each independently are a group of formula (III) :

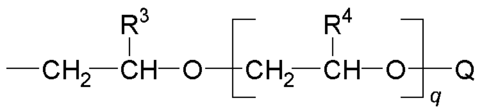
(III)

wherein

$R^3$ each independently is phenyl or $-CH_2OR^5$;
$R^4$ each independently is H or $C_{1-4}$-alkyl preferably H or methyl, even more preferably H; and
*q* is an integer of 0-50, preferably 1-25, even more preferably 1-10.

10. The compound of claim 9, wherein one Q group on each $R^1$ and $R^2$ is Y.

11. The compound of any of claims 1-10 wherein R' each independently is H, $CH_3$ or $CH_2O(CH_2CH_2O)_zQ$; R" each independently is H, $CH_3$ or $CH_2O(CH_2CH_2O)_zQ$; (x+y) is $\leq 5$; z is 0-5.

12. The compound of any of claims 1-8 wherein the thiophene azo dye has a molecular weight of > 500 Daltons, preferably 501-5000 Daltons, more preferably 677-2500, and even more preferred 825-1200 Daltons.

13. The compound of any of claims 1-8, wherein in formula (II) $R^8$ each independently is H, $C_{4-7}$-alkenyl or $C_{9-18}$-alkenyl.

## Patentansprüche

1. Verbindung, die ein Thiophenazocarboxylat-Farbstoff der Formel (I) ist:

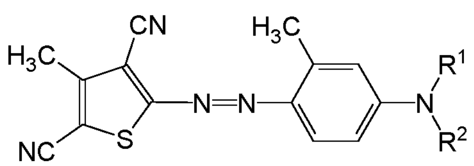
(I)

worin

$R^1$, $R^2$ jeweils unabhängig $[(CH_2CR'HO)_x(CH_2CR''HO)_yQ]$ sind;

R' H, $C_{1-4}$-Alkyl, $CH_2O(CH_2CH_2O)_zQ$, Phenyl oder $CH_2OR^5$ ist;
R" H, $C_{1-4}$-Alkyl, $CH_2O(CH_2CH_2O)_zQ$, Phenyl oder $CH_2OR^5$ ist;
(x+y) im Bereich von 1-50 liegt;
$y \geq 1$ ist;
z im Bereich von 0-20 liegt;
$R^5$ jeweils lineares oder verzweigtes $C_{1-16}$-Alkyl, $C_{6-14}$-Aryl oder $C_{7-16}$-Arylalkyl ist;
Q H oder Y ist; worin Y eine Gruppe der Formel (II) ist

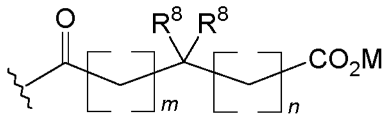
(II)

worin M unabhängig für jede Gruppe Y H oder ein ladungsausgleichendes Kation ist; *m* 0-5 ist; n 0-5 ist; und (m+n) 1-10 ist; und $R^8$ jeweils unabhängig H oder $C_{3-18}$-Alkenyl ist, und mindestens ein $R^8$ nicht H ist;

mit der Maßgabe, dass

(i) der Farbstoff mindestens eine Gruppe Q umfasst, die Y ist, und
(ii) die Verbindung der folgenden Formel ausgeschlossen ist:

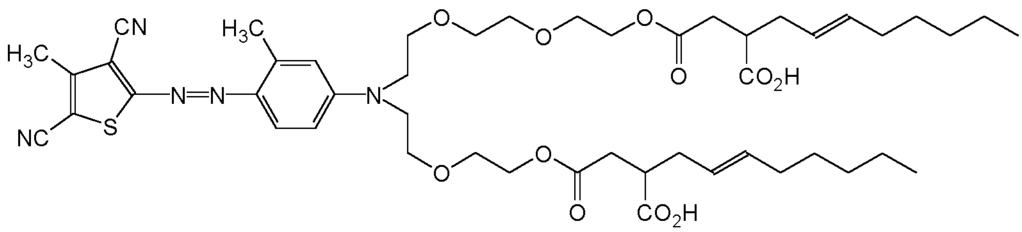
.

**2.** Verbindung gemäß Anspruch 1, worin (x+y) im Bereich von 2-50, vorzugsweise 2-25 und bevorzugter 2-10 liegt.

**3.** Verbindung gemäß Anspruch 1 oder 2, worin z im Bereich von 0-10 und vorzugsweise 0-5 liegt.

**4.** Verbindung gemäß einem der Ansprüche 1-3, worin jedes $R^5$ ausgewählt ist aus Methyl, Ethyl, Propyl, Isopropyl, Butyl, sec-Butyl, Isobutyl, t-Butyl, Hexyl, 2-Ethylhexyl, Octyl, Decyl, Dodecyl, Tetradecyl, Hexadecyl, Phenyl, Benzyl, 2-Phenylethyl und Naphthyl.

**5.** Verbindung gemäß einem der Ansprüche 1-4, worin m in Formel (II) 0, 1, 2 oder 3 ist.

**6.** Verbindung gemäß einem der Ansprüche 1-5, worin n in Formel (II) 0, 1, 2 oder 3 ist.

**7.** Verbindung gemäß einem der Ansprüche 1-6, worin (m+n) in Formel (II) 1, 2 oder 3 ist.

**8.** Verbindung gemäß einem der Ansprüche 1-7, worin $R^8$ jeweils unabhängig H oder $C_{4-18}$-Alkenyl ist.

**9.** Verbindung gemäß einem der Ansprüche 1-8, worin

(a) $R^1$ und $R^2$ unabhängig ausgewählt sind aus
$[(CH_2CR'HO)_x(CH_2CR''HO)_yQ]$, worin

R' H, $CH_3$ oder $CH_2O(CH_2CH_2O)_zQ$ ist;
R" H oder $CH_2O(CH_2CH_2O)_zQ$ ist;
$(x+y) \leq 5$ ist; und
z 0-5 ist; oder

(b) $R^1$ und $R^2$ jeweils unabhängig eine Gruppe der Formel (III) sind:

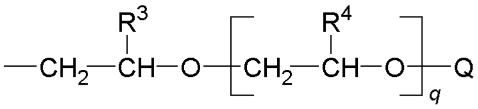

(III)

worin

$R^3$ jeweils unabhängig Phenyl oder $-CH_2OR^5$ ist;
$R^4$ jeweils unabhängig H oder $C_{1-4}$-Alkyl, vorzugsweise H oder Methyl, bevorzugter H ist; und
*q* eine ganze Zahl von 0-50, vorzugsweise 1-25, bevorzugter 1-10 ist.

**10.** Verbindung gemäß Anspruch 9, worin eine Q-Gruppe in jedem $R^1$ und $R^2$ Y ist.

**11.** Verbindung gemäß einem der Ansprüche 1-10, worin R' jeweils unabhängig H, $CH_3$ oder $CH_2O(CH_2CH_2O)_zQ$ ist; R" jeweils unabhängig H, $CH_3$ oder $CH_2O(CH_2CH_2O)_zQ$ ist; $(x+y) \leq 5$ ist; z 0-5 ist.

**12.** Verbindung gemäß einem der Ansprüche 1-8, worin der Thiophenazofarbstoff ein Molekulargewicht von > 500 Dalton, vorzugsweise 501-5000 Dalton, bevorzugter 677-2500 und noch bevorzugter 825-1200 Dalton aufweist.

**13.** Verbindung gemäß einem der Ansprüche 1-8, worin $R^8$ in Formel (II) jeweils unabhängig H, $C_{4-7}$-Alkenyl oder $C_{9-18}$-Alkenyl ist.

## Revendications

**1.** Composé qui est un colorant carboxylate azoïque de thiophène de formule (I) :

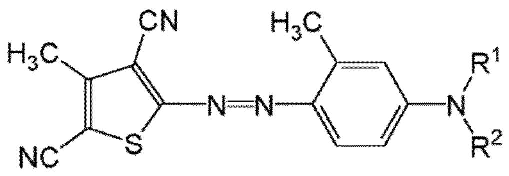

(I)

dans lequel

$R^1$, $R^2$ sont chacun indépendamment $[(CH_2CR'\ HO)_x(CH_2CR''HO)yQ]$ ;
R' est H, alkyle en $C_{1-4}$, $CH_2O(CH_2CH_2O)_zQ$, phényle ou $CH_2OR^5$ ;
R" est H, alkyle en $C_{1-4}$, $CH_2O(CH_2CH_2O)_zQ$, phényle ou $CH_2OR^5$ ;
*(x+y)* est dans la plage de 1-50 ;
y est $\geq 1$ ;
z est dans la plage 0-20 ;
$R^5$ est chacun un alkyle en $C_{1-16}$ linéaire ou ramifié, aryle en $C_{6-14}$ ou arylalkyle en $C_{7-16}$ ;
Q est H ou Y ; dans lequel Y est un groupe de formule (II)

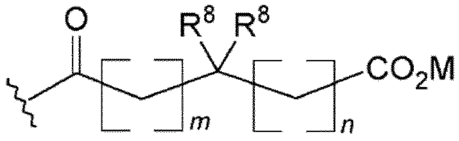

(II)

dans lequel indépendamment pour chaque groupe Y, M est H ou un cation d'équilibrage de charge ; m est 0-5 ; *n* est 0-5 ; et (m+n) est 1-10 ; et $R^8$ sont chacun indépendamment H ou alcényle en $C_{3-18}$, et au moins un $R^8$ n'est pas H ;

à la condition que

(i) le colorant comprenne au moins un groupe Q qui est Y, et

(ii) le composé de la formule suivante soit exclu :

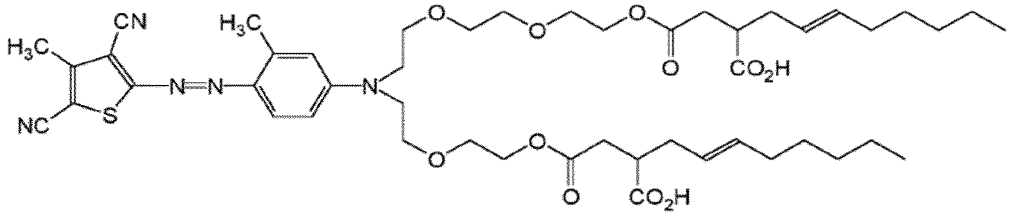

2. Composé selon la revendication 1, dans lequel (x+y) est dans la plage 2-50, de préférence 2-25, et plus préférablement 2-10.

3. Composé selon la revendication 1 ou la revendication 2, dans lequel z est dans la plage 0-10, et de préférence 0-5.

4. Composé selon l'une quelconque des revendications 1 à 3, dans lequel chaque $R^5$ est choisi parmi méthyle, éthyle, propyle, isopropyle, butyle, sec-butyle, isobutyle, t-butyle, hexyle, 2-éthylhexyle, octyle, décyle, dodécyle, tétradécyle, hexadécyle, phényle, benzyle, 2-phényléthyle et naphtyle.

5. Composé selon l'une quelconque des revendications 1 à 4, dans lequel m dans la formule (II) est 0, 1, 2 ou 3.

6. Composé selon l'une quelconque des revendications 1 à 5, dans lequel *n* dans la formule (II) est 0, 1, 2 ou 3.

7. Composé selon l'une quelconque des revendications 1 à 6, dans lequel (m+n) dans la formule (II) est 1, 2 ou 3.

8. Composé selon l'une quelconque des revendications 1 à 7, dans lequel $R^8$ sont chacun indépendamment H ou alcényle en $C_{4-18}$.

9. Composé selon l'une quelconque des revendications 1 à 8 dans lequel

(a) $R^1$ et $R^2$ sont indépendamment sélectionnés parmi $[(CH_2CR'HO)_x(CH_2CR''HO)_yQ]$, dans lequel

$R'$ est H, $CH_3$ ou $CH_2O(CH_2CH_2O)_zQ$ ;
$R''$ est H ou $CH_2O(CH_2CH_2O)_zQ$ ;
(x+y) est $\leq 5$ ; et
z est 0-5 ; ou

(b) $R^1$ et $R^2$ sont chacun indépendamment un groupe de formule (III) :

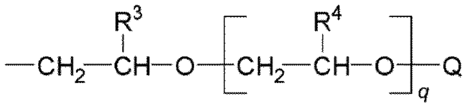
(III)

dans lequel

$R^3$ sont chacun indépendamment phényle ou $-CH_2OR^5$ ;
$R^4$ sont chacun indépendamment H ou alkyle en $C_{1-4}$ de préférence H ou méthyle, encore plus préférablement H ; et
*q* est un nombre entier de 0-50, de préférence 1-25, encore plus préférablement 1-10.

10. Composé selon la revendication 9, dans lequel un groupe Q sur chaque $R^1$ et $R^2$ est Y.

11. Composé selon l'une quelconque des revendications 1 à 10 dans lequel R' sont chacun indépendamment H, $CH_3$ ou $CH_2O(CH_2CH_2O)_zQ$ ; R'' sont chacun indépendamment H, $CH_3$ ou $CH_2O(CH_2CH_2O)_zQ$ ; (x+y) est $\leq 5$ ; z est 0-5.

12. Composé selon l'une quelconque des revendications 1 à 8 dans lequel le colorant azoïque de thiophène a un poids

moléculaire > 500 Daltons, de préférence 501-5 000 Daltons, plus préférablement 677-2 500, et encore plus préférablement 825-1 200 Daltons.

**13.** Composé selon l'une quelconque des revendications 1 à 8, dans lequel, dans la formule (II), $R^8$ sont chacun indépendamment H, alcényle en $C_{4-7}$ ou alcényle en $C_{9-18}$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 200632327 A
- WO 2008090091 A
- WO 2008091524 A
- US 4912203 A, Kluger
- US 5512685 A, Jarvinen
- WO 2008087497 A
- US 5576282 A
- US 6306812 B
- US 6326348 B
- WO 0887497 A
- US 2008034511 A
- US 7208459 B
- US 20080305982 A
- US 20090247449 A
- WO 9108281 A
- US 6312936 B
- US 5679630 A
- US 4760025 A
- US 7262042 B
- WO 09021867 A
- WO 8906270 A
- WO 05052161 A
- WO 05052146 A
- WO 07044993 A
- US 5352604 A
- US 7153818 B
- WO 9700324 A
- EP 1022334 A
- WO 9402597 A
- WO 9418314 A
- WO 9623874 A
- WO 9743424 A
- US 5856164 A
- WO 9923211 A
- WO 9623873 A
- WO 0060060 A
- WO 06002643 A
- US 6093562 A
- WO 09149130 A
- US 6939702 B
- US 20090217464 A
- US 7141403 B2
- WO 9817767 A
- WO 2012000846 A
- WO 2008015443 A
- WO 2008014965 A
- US 20070173430 A
- US 4430243 A
- US 5597936 A
- US 5595967 A
- WO 05042532 A
- WO 0032601 A
- US 6225464 B
- US 7445644 B
- US 7585376 B
- US 20090176684 A
- WO 2012004134 A
- US 4790856 A
- US 3646015 A
- US 20060205631 A
- US 20050203213 A
- US 7294611 B
- US 6855680 B
- WO 2010034736 A
- US 3962418 A
- US 3958581 A
- US 20070207109 A
- US 34584 A
- US 5104646 A
- US 5106609 A
- US 4152416 A
- US 2826551 A
- US 3964500 A
- US 4364837 A
- US 6607717 B
- US 6482969 B
- US 5807956 A
- US 5981681 A
- US 6207782 B
- US 7465439 B
- US 7041767 B
- US 7217777 B
- US 20070286837 A
- US 20050048549 A
- US 20070041929 A
- GB 849433 B
- DE 10036533 B
- US 5674478 A
- US 5750122 A
- US 4529586 A
- US 4507280 A
- US 4663158 A
- US 4197865 A
- US 4217914 A
- US 4381919 A
- US 4422853 A
- WO 2009043709 A
- US 4489455 A

- US 4489574 A
- US 2954347 A
- US 4265779 A
- US 3455839 A
- US 3933672 A
- US 4652392 A
- US 4978471 A
- US 4983316 A
- US 5288431 A
- US 4639489 A
- US 4749740 A
- US 4798679 A
- US 4075118 A
- EP 0354016 A
- EP 0150872 A
- DE 2124526 A
- WO 2011163457 A
- US 4990280 A
- US 20030087791 A
- US 20030087790 A
- US 20050003983 A
- US 20040048764 A
- US 4762636 A
- US 6291412 B
- US 20050227891 A
- EP 1070115 A
- US 5879584 A
- US 5691297 A
- US 5574005 A
- US 5569645 A
- US 5565422 A
- US 5516448 A
- US 5489392 A
- US 5486 A
- EP 2133410 A
- US 6166117 A
- US 6787512 B
- EP 2088187 A
- WO 2010084039 A
- WO 2007039042 A
- WO 2010022775 A
- WO 009132870 A
- WO 2009087033 A
- WO 2007006357 A
- WO 2007096052 A
- WO 2011020991 A
- WO 2006053598 A
- WO 2003018740 A
- WO 2003018738 A
- US 6020303 A
- US 6060443 A

**Non-patent literature cited in the description**

- Colour Index. Society of Dyers and Colourists
- **M. ZAHRADNIK.** The Production and Application of Fluorescent Brightening Agents. John Wiley & Sons, 1982
- International Cosmetic Ingredient Dictionary. 1993
- CTFA Cosmetic Ingredient Handbook. 1992
- CTFA Cosmetic Ingredient Dictionary. The Cosmetic, Toiletry, and Fragrance Association, Inc, 1982
- Chemistry and Technology of Silicones. Academic Press, 1968
- Encyclopedia of Polymer Science and Engineering. John Wiley & Sons, Inc, 1989, vol. 15, 204-308
- Kirk Othmer Encyclopedia of Chemical Technology. John Wiley & Sons, Inc, 1979, vol. 7, 430-447